(19) **Europäisches Patentamt / European Patent Office / Office européen des brevets**

(11) **EP 4 697 718 A1**

(12) **EUROPEAN PATENT APPLICATION**
published in accordance with Art. 153(4) EPC

(43) Date of publication:
**18.02.2026 Bulletin 2026/08**

(21) Application number: **24803754.1**

(22) Date of filing: **09.05.2024**

(51) International Patent Classification (IPC):
**H04N 19/52** $^{(2014.01)}$    **H04N 19/11** $^{(2014.01)}$
**H04N 19/70** $^{(2014.01)}$    **H04N 19/527** $^{(2014.01)}$
**H04N 19/109** $^{(2014.01)}$    **H04N 19/159** $^{(2014.01)}$
**H04N 19/176** $^{(2014.01)}$

(52) Cooperative Patent Classification (CPC):
**H04N 19/109; H04N 19/11; H04N 19/159;
H04N 19/176; H04N 19/52; H04N 19/527;
H04N 19/70**

(86) International application number:
**PCT/KR2024/006290**

(87) International publication number:
**WO 2024/232701 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.05.2023   KR 20230060325
08.05.2024   KR 20240060640**

(71) Applicants:
• **Hyundai Motor Company**
  **Seoul 06797 (KR)**
• **Kia Corporation**
  **Seoul 06797 (KR)**
• **Kwangwoon University**
  **Industry-Academic Collaboration Foundation**
  **Seoul 01897 (KR)**

(72) Inventors:
• **SIM, Dong Gyu**
  **Seoul 01901 (KR)**
• **BYEON, Joo Hyung**
  **Seoul 08269 (KR)**
• **LEE, Min Hun**
  **Uijeongbu-si Gyeonggi-do 11688 (KR)**
• **HEO, Jin**
  **Yongin-si Gyeonggi-do 16836 (KR)**
• **CHOI, Jung Ah**
  **Seoul 05338 (KR)**
• **PARK, Seung Wook**
  **Yongin-si Gyeonggi-do 16847 (KR)**

(74) Representative: **Isarpatent
Patent- und Rechtsanwälte Partg mbB
Friedrichstraße 31
80801 München (DE)**

(54) **VIDEO ENCODING/DECODING METHOD AND DEVICE USING COMBINED INTRA/INTER PREDICTION MODE BASED ON SUB-BLOCK**

(57)    The present disclosure discloses video encoding/decoding methods and apparatuses and provides a video decoding method including determining an inter-prediction mode of a current block based on at least one of motion vectors of first subblocks in a reference picture of the current block or control point motion vectors of the current block, determining an intra-prediction mode of the current block based on at least one of reference pixels of the current block or a template of the current block, generating inter-prediction blocks of the subblocks by using the inter-prediction mode of the current block, and generating an intra-prediction block of the current block by using the intra-prediction mode of the current block, and generating a prediction block of the current block by weighted summing the inter-prediction blocks of the subblocks and the intra-prediction block of the current block.

Start

Determine Motion Vector Of Subblocks — S1310

Determine Intra-Prediction Mode Of Current Block — S1320

Calculate Weight — S1330

Generate Prediction Block Of Current Block — S1340

End

# FIG. 13

**Description**

CROSS-REFERENCE TO RELATED APPLICATION

This application claims priority from Korean Patent Application No. 10-2023-0060325 filed on May 10, 2023, and Korean Patent Application No. 10-2024-0060640 filed on May 8, 2024, the disclosures of which are incorporated by reference herein in their entirety.

[Technical Field]

The present disclosure in some embodiments relates to a video encoding/decoding method and apparatus using a Combined Intra and Inter Prediction mode based on subblock. More particularly, the present disclosure relates to a video encoding/decoding method and apparatus that weighted sum inter-prediction blocks of subblocks and an intra-prediction block of the current block to generate a prediction block of a current block.

[Background]

The statements in this section merely provide background information related to the present disclosure and do not necessarily constitute prior art.

Since video data has a large amount of data compared to audio or still image data, the video data requires a lot of hardware resources, including a memory, to store or transmit the video data without processing for compression.

Accordingly, an encoder is generally used to compress and store or transmit video data. A decoder receives the compressed video data, decompresses the received compressed video data, and plays the decompressed video data. Video compression techniques include H.264/Advanced Video Coding (AVC), High Efficiency Video Coding (HEVC), and Versatile Video Coding (VVC), which has improved coding efficiency by about 30% or more compared to HEVC.

However, since the image size, resolution, and frame rate gradually increase, the amount of data to be encoded also increases. Accordingly, a new compression technique providing higher coding efficiency and an improved image enhancement effect than existing compression techniques is required.

Combined inter/intra prediction mode (CIIP mode) is a method of generating the prediction block of the current block by weighted averaging the inter-prediction signal and intra-prediction signal. In CIIP mode, there is a need for prediction to be performed in subblock units to increase encoding and decoding efficiency.

[Disclosure]

[Technical Problem]

The present disclosure in some embodiments seeks to provide methods and apparatus for performing prediction in subblock units in a combined inter/intra prediction (CIIP) mode.

Further, the present disclosure seeks to provide methods and apparatus for generating a prediction block of a current block in CIIP mode by weighted summing the inter-prediction blocks of subblocks and the intra-prediction block of the current block.

The present disclosure further seeks to provide methods and apparatus for increasing video encoding/decoding efficiency.

The present disclosure further seeks to provide a recording medium storing a bitstream generated by video encoding/decoding methods or apparatus of the present disclosure.

The present disclosure further seeks to provide a method and apparatus for transmitting a bitstream generated by the video encoding/decoding methods or apparatus of the present disclosure.

[Summary]

The present disclosure in at least one embodiment provides a video decoding method, including **determining** an inter-prediction mode of a current block based on at least one of motion vectors of first subblocks in a reference picture of the current block or control point motion vectors of the current block, **determining** an intra-prediction mode of the current block based on at least one of reference pixels of the current block or a template of the current block, **generating** inter-prediction blocks of the subblocks by using the inter-prediction mode of the current block, and generating an intra-prediction block of the current block by using the intra-prediction mode of the current block, and **generating** a prediction block of the current block by weighted summing the inter-prediction blocks of the subblocks and the intra-prediction block of the current block.

The present disclosure in another embodiment provides a video encoding method, including **determining** an inter-prediction mode of a current block based on at least one of motion vectors of first subblocks in a reference picture of the current block or control point motion vectors of the current block, **determining** an intra-prediction mode of the current block based on at least one of reference pixels of the current block or a template of the current block, **generating** inter-prediction blocks of the subblocks by using the inter-prediction mode of the current block, and generating an intra-prediction block of the current block by using the intra-prediction mode of the current block, and **generating** a prediction block of the current block by weighted summing the inter-prediction blocks of the subblocks and the intra-prediction block of the current block.

Further, the present disclosure provides a method of transmitting a bitstream generated by the video encoding methods or apparatuses according to the present disclosure.

Further, the present disclosure provides a recording medium storing a bitstream generated by the video encoding methods or apparatuses according to the present disclosure.

Further, the present disclosure provides a recording medium storing a bitstream that is received, decoded, and utilized to reconstruct a video by the video decoding apparatuses according to the present disclosure.

[Advantageous Effects]

As described above, the present disclosure in some embodiments can provide methods and apparatus for performing prediction in subblock units in a combined inter/intra prediction (CIIP) mode.

Further, the present disclosure can provide methods and apparatus for generating a prediction block of a current block in CIIP mode by weighted summing inter-prediction blocks of subblocks and the intra-prediction block.

Further, the present disclosure can provide methods and apparatus for increasing video encoding/decoding efficiency.

Effects obtainable with the present disclosure are not limited to the above-mentioned effect, and other unmentioned effects could be clearly understood by those skilled in the art from the description below.

[Brief Description of the Drawings]

FIG. 1 is a block diagram of a video encoding apparatus that may implement the techniques of the present disclosure.

FIG. 2 illustrates a method for splitting a block using a quadtree plus binary tree ternarytree (QTBTTT) structure.

FIGS. 3A and 3B illustrate a plurality of intra prediction modes including wide-angle intra prediction modes.

FIG. 4 illustrates neighboring blocks of a current block.

FIG. 5 is a block diagram of a video decoding apparatus that may implement the techniques of the present disclosure.

FIG. 6 is a diagram illustrating a method generating a prediction block of the current block in the combined inter/intra prediction mode (CIIP mode).

FIG. 7 is a diagram illustrating the neighboring blocks referenced to determine the weight in the CIIP mode, according to at least one embodiment of the present disclosure.

FIG. 8 is a diagram illustrating a method of determining weights in the CIIP mode, according to at least one embodiment of the present disclosure.

FIG. 9 is a diagram illustrating a method of determining motion vectors in subblock unit, according to at least one embodiment of the present disclosure.

FIG. 10 is a diagram illustrating the pixel-wise calculation of an affine model, according to at least one embodiment of the present disclosure.

FIG. 11 is a diagram illustrating the calculation of an affine model by using a centroid vector, according to at least one embodiment of the present disclosure.

FIG. 12 is a diagram illustrating the subblock-wise calculation of an affine model, according to at least one embodiment of the present disclosure.

FIG. 13 is a flowchart of the process of generating a prediction block of the current block by performing a subblock-wise prediction in the CIIP mode, according to at least one embodiment of the present disclosure.

FIG. 14 is a diagram illustrating a method of calculating the template costs of subblocks, according to at least one embodiment of the present disclosure.

FIG. 15 is a diagram illustrating a method of determining the weights used to perform a weighted summation of the inter-prediction blocks of the subblocks and the intra-prediction block of the current block in CIIP mode, according to at least one embodiment of the present disclosure.

FIGS. 16A and 16B are diagrams illustrating a method of partitioning a current block into multiple regions and illustrating the weights for the respective regions, according to at least one embodiment of the present disclosure.

FIGS. 17A and 17B are diagrams illustrating a method of partitioning a current block into multiple regions and the weights for the respective regions, according to another at least one embodiment of the present disclosure.

FIGS. 18A and 18B are diagrams illustrating the weight function of subblocks, according to at least one embodiment of the present disclosure.

FIG. 19 is a diagram illustrating the weight for a subblock when a co-located subblock in the reference picture has zero motion vector, according to at least one embodiment of the present disclosure

FIG. 20 is a flowchart of a video decoding process according to at least one embodiment of the present disclosure.

FIG. 21 is a flowchart of a video encoding process according to at least one embodiment of the present disclosure.

[Detailed Description]

Hereinafter, some embodiments of the present disclosure are described in detail with reference to the accompanying illustrative drawings. In the following description, like reference numerals designate like elements, although the elements are shown in different drawings. Further, in the following description of some embodiments, detailed descriptions of related known components and functions when considered to obscure the subject of the present disclosure may be omitted for the purpose of clarity and for brevity.

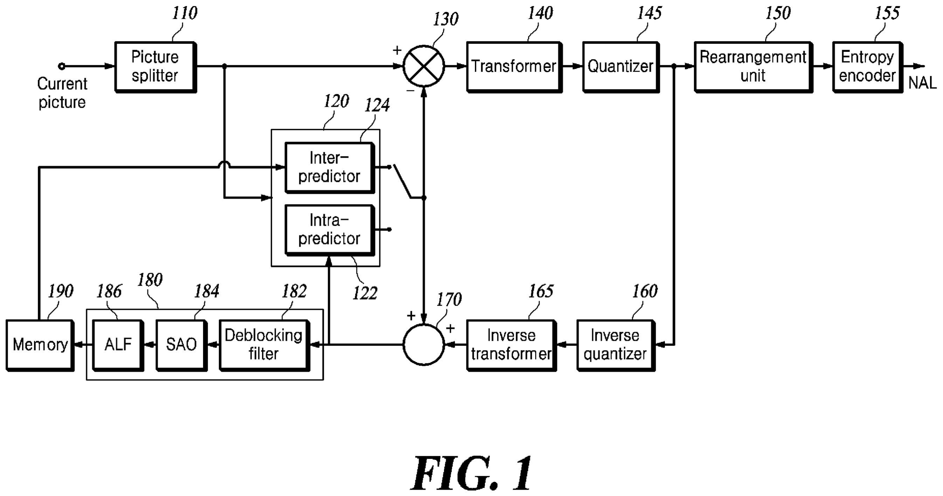

FIG. 1 is a block diagram of a video encoding apparatus that may implement technologies of the present disclosure. Hereinafter, referring to illustration of FIG. 1, the video encoding apparatus and components of the apparatus are described.

The encoding apparatus may include a picture splitter 110, a predictor 120, a subtractor 130, a transformer 140, a quantizer 145, a rearrangement unit 150, an entropy encoder 155, an inverse quantizer 160, an inverse transformer 165, an adder 170, a loop filter unit 180, and a memory 190.

Each component of the encoding apparatus may be implemented as hardware or software or implemented as a combination of hardware and software. Further, a function of each component may be implemented as software, and a microprocessor may also be implemented to execute the function of the software corresponding to each component.

One video is constituted by one or more sequences including a plurality of pictures. Each picture is split into a plurality of areas, and encoding is performed for each area. For example, one picture is split into one or more tiles or/and slices. Here, one or more tiles may be defined as a tile group. Each tile or/and slice is split into one or more coding tree units (CTUs). In addition, each CTU is split into one or more coding units (CUs) by a tree structure. Information applied to each coding unit (CU) is encoded as a syntax of the CU, and information commonly applied to the CUs included in one CTU is encoded as the syntax of the CTU. Further, information commonly applied to all blocks in one slice is encoded as the syntax of a slice header, and information applied to all blocks constituting one or more pictures is encoded to a picture parameter set (PPS) or a picture header. Furthermore, information, which the plurality of pictures commonly refers to, is encoded to a sequence parameter set (SPS). In addition, information, which one or more SPS commonly refer to, is encoded to a video parameter set (VPS). Further, information commonly applied to one tile or tile group may also be encoded as the syntax of a tile or tile group header. The syntaxes included in the SPS, the PPS, the slice header, the tile, or the tile group header may be referred to as a high level syntax.

The picture splitter 110 determines a size of a coding tree unit (CTU). Information on the size of the CTU (CTU size) is encoded as the syntax of the SPS or the PPS and delivered to a video decoding apparatus.

The picture splitter 110 splits each picture constituting the video into a plurality of coding tree units (CTUs) having a predetermined size and then recursively splits the CTU by using a tree structure. A leaf node in the tree structure becomes the coding unit (CU), which is a basic unit of encoding.

The tree structure may be a quadtree (QT) in which a higher node (or a parent node) is split into four lower nodes (or child nodes) having the same size. The tree structure may also be a binary tree (BT) in which the higher node is split into two lower nodes. The tree structure may also be a ternary tree (TT) in which the higher node is split into three lower nodes at a ratio of 1:2:1. The tree structure may also be a structure in which two or more structures among the QT structure, the BT structure, and the TT structure are mixed. For example, a quadtree plus binary tree (QTBT) structure may be used or a quadtree plus binary tree ternary tree (QTBTTT) structure may be used. Here, a binary tree ternary tree (BTTT) is added to the tree structures to be referred to as a multiple-type tree (MTT).

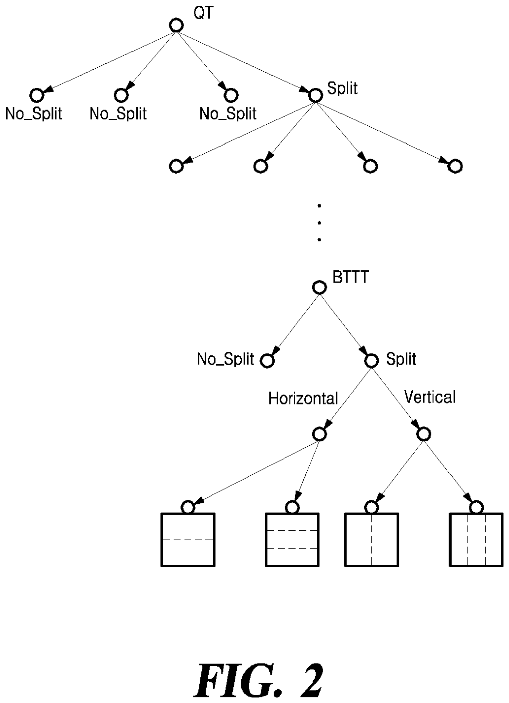

FIG. 2 is a diagram for describing a method for splitting a block by using a QTBTTT structure.

As illustrated in FIG. 2, the CTU may first be split into the QT structure. Quadtree splitting may be recursive until the size of a splitting block reaches a minimum block size (MinQTSize) of the leaf node permitted in the QT. A first flag (QT_split_flag) indicating whether each node of the QT structure is split into four nodes of a lower layer is encoded by the entropy encoder 155 and signaled to the video decoding apparatus. When the leaf node of the QT is not larger than a maximum block size (MaxBTSize) of a root node permitted in the BT, the leaf node may be further split into at least one of the BT structure or the TT structure. A plurality of split directions may be present in the BT structure and/or the TT structure. For example, there may be two directions, i.e., a direction in which the block of the corresponding node is split horizontally and a direction in which the block of the corresponding node is split vertically. As illustrated in FIG. 2, when the MTT splitting starts, a second flag (mtt_split_flag) indicating whether the nodes are split, and a flag additionally indicating the split direction (vertical or horizontal), and/or a flag indicating a split type (binary or ternary) if the nodes are split are encoded by the entropy encoder 155 and signaled to the video decoding apparatus.

Alternatively, prior to encoding the first flag (QT_split_flag) indicating whether each node is split into four nodes of the lower layer, a CU split flag (split_cu_flag) indicating whether the node is split may also be encoded. When a value of the CU split flag (split_cu_flag) indicates that each node is not split, the block of the corresponding node becomes the leaf node in the split tree structure and becomes the CU, which is the basic unit of encoding. When the value of the CU split flag (split_cu_flag) indicates that each node is split, the video encoding apparatus starts encoding the first flag first by the above-described scheme.

When the QTBT is used as another example of the tree structure, there may be two types, i.e., a type (i.e., symmetric horizontal splitting) in which the block of the corresponding node is horizontally split into two blocks having the same size and a type (i.e., symmetric vertical splitting) in which the block of the corresponding node is vertically split into two blocks having the same size. A split flag (split_flag) indicating whether each node of the BT structure is split into the block of the lower layer and split type information indicating a splitting type are encoded by the entropy encoder 155 and delivered to the video decoding apparatus. Meanwhile, a type in which the block of the corresponding node is split into two blocks asymmetrical to each other may be additionally present. The asymmetrical form may include a form in which the block of the corresponding node is split into two rectangular blocks having a size ratio of 1:3 or may also include a form in which the block of the corresponding node is split in a diagonal direction.

The CU may have various sizes according to QTBT or QTBTTT splitting from the CTU. Hereinafter, a block corresponding to a CU (i.e., the leaf node of the QTBTTT) to be encoded or decoded is referred to as a "current block." As the QTBTTT splitting is adopted, a shape of the current block may also be a rectangular shape in addition to a square shape.

The predictor 120 predicts the current block to generate a prediction block. The predictor 120 includes an intra predictor 122 and an inter predictor 124.

In general, each of the current blocks in the picture may be predictively coded. In general, the prediction of the current block may be performed by using an intra prediction technology (using data from the picture including the current block) or an inter prediction technology (using data from a picture coded before the picture including the current block). The inter prediction includes both unidirectional prediction and bidirectional prediction.

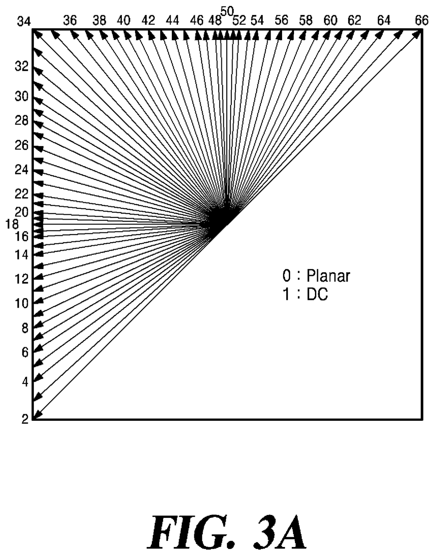

The intra predictor 122 predicts pixels in the current block by using pixels (reference pixels) positioned on a neighbor of the current block in the current picture including the current block. There is a plurality of intra prediction modes according to the prediction direction. For example, as illustrated in FIG. 3A, the plurality of intra prediction modes may include 2 nondirectional modes including a Planar mode and a DC mode and may include 65 directional modes. A neighboring pixel and an arithmetic equation to be used are defined differently according to each prediction mode.

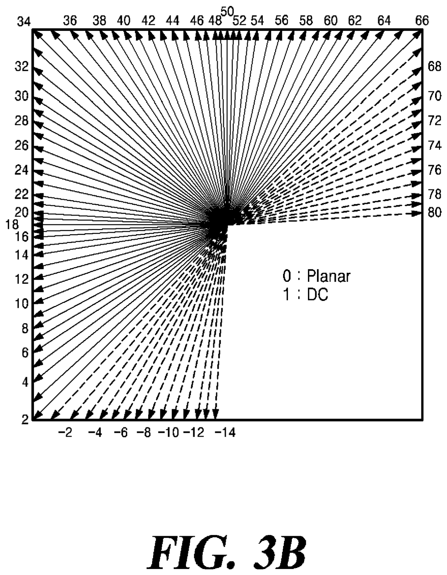

For efficient directional prediction for the current block having a rectangular shape, directional modes (#67 to #80, intra prediction modes #-1 to #-14) illustrated as dotted arrows in FIG. 3B may be additionally used. The directional modes may be referred to as "wide angle intra-prediction modes". In FIG. 3B, the arrows indicate corresponding reference samples used for the prediction and do not represent the prediction directions. The prediction direction is opposite to a direction indicated by the arrow. When the current block has the rectangular shape, the wide angle intra-prediction modes are modes in which the prediction is performed in an opposite direction to a specific directional mode without additional bit transmission. In this case, among the wide angle intra-prediction modes, some wide angle intra-prediction modes usable for the current block may be determined by a ratio of a width and a height of the current block having the rectangular shape. For example, when the current block has a rectangular shape in which the height is smaller than the width, wide angle intra-prediction modes (intra prediction modes #67 to #80) having an angle smaller than 45 degrees are usable. When the current block has a rectangular shape in which the width is larger than the height, the wide angle intra-prediction modes having an angle larger than -135 degrees are usable.

The intra predictor 122 may determine an intra prediction to be used for encoding the current block. In some examples, the intra predictor 122 may encode the current block by using multiple intra prediction modes and may also select an appropriate intra prediction mode to be used from tested modes. For example, the intra predictor 122 may calculate rate-distortion values by using a rate-distortion analysis for multiple tested intra prediction modes and may also select an intra prediction mode having best rate-distortion features among the tested modes.

The intra predictor 122 selects one intra prediction mode among a plurality of intra prediction modes and predicts the current block by using a neighboring pixel (reference pixel) and an arithmetic equation determined according to the selected intra prediction mode. Information on the selected intra prediction mode is encoded by the entropy encoder 155 and delivered to the video decoding apparatus.

The inter predictor 124 generates the prediction block for the current block by using a motion compensation process. The inter predictor 124 searches a block most similar to the current block in a reference picture encoded and decoded earlier than the current picture and generates the prediction block for the current block by using the searched block. In addition, a motion vector (MV) is generated, which corresponds to a displacement between the current block in the current picture and the prediction block in the reference picture. In general, motion estimation is performed for a luma component, and a motion vector calculated based on the luma component is used for both the luma component and a chroma component. Motion information including information on the reference picture and information on the motion vector used for predicting the current block is encoded by the entropy encoder 155 and delivered to the video decoding apparatus.

The inter predictor 124 may also perform interpolation for the reference picture or a reference block in order to increase accuracy of the prediction. In other words, sub-samples between two contiguous integer samples are interpolated by applying filter coefficients to a plurality of contiguous integer samples including two integer samples. When a process of searching a block most similar to the current block is performed for the interpolated reference picture, not integer sample unit precision but decimal unit precision may be expressed for the motion vector. Precision or resolution of the motion vector may be set differently for each target area to be encoded, e.g., a unit such as the slice, the tile, the CTU, the CU, and the like. When such an adaptive motion vector resolution (AMVR) is applied, information on the motion vector resolution to be applied to each target area should be signaled for each target area. For example, when the target area is the CU, the information on the motion vector resolution applied for each CU is signaled. The information on the motion vector resolution may be information representing precision of a motion vector difference to be described below.

Meanwhile, the inter predictor 124 may perform inter prediction by using bi-prediction. In the case of bi-prediction, two reference pictures and two motion vectors representing a block position most similar to the current block in each reference picture are used. The inter predictor 124 selects a first reference picture and a second reference picture from reference picture list 0 (RefPicList0) and reference picture list 1 (RefPicList1), respectively. The inter predictor 124 also searches blocks most similar to the current blocks in the respective reference pictures to generate a first reference block and a second reference block. In addition, the prediction block for the current block is generated by averaging or weighted-averaging the first reference block and the second reference block. In addition, motion information including information on two reference pictures used for predicting the current block and including information on two motion vectors is delivered to the entropy encoder 155. Here, reference picture list 0 may be constituted by pictures before the current picture in a display order among pre-reconstructed pictures, and reference picture list 1 may be constituted by pictures after the current picture in the display order among the pre-reconstructed pictures. However, although not particularly limited thereto, the pre-reconstructed pictures after the current picture in the display order may be additionally included in reference picture list 0. Inversely, the pre-reconstructed pictures before the current picture may also be additionally included in reference picture list 1.

In order to minimize a bit quantity consumed for encoding the motion information, various methods may be used.

For example, when the reference picture and the motion vector of the current block are the same as the reference picture and the motion vector of the neighboring block, information capable of identifying the neighboring block is encoded to deliver the motion information of the current block to the video decoding apparatus. Such a method is referred to as a merge mode.

In the merge mode, the inter predictor 124 selects a predetermined number of merge candidate blocks (hereinafter, referred to as a "merge candidate") from the neighboring blocks of the current block.

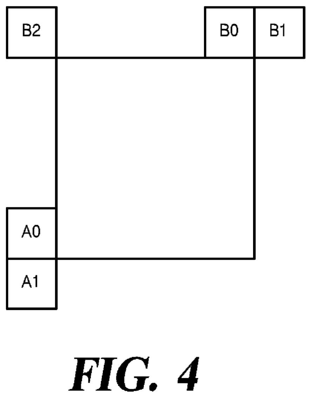

As a neighboring block for deriving the merge candidate, all or some of a left block A0, a bottom left block A1, a top block B0, a top right block B1, and a top left block B2 adjacent to the current block in the current picture may be used as illustrated in FIG. 4. Further, a block positioned within the reference picture (may be the same as or different from the reference picture used for predicting the current block) other than the current picture at which the current block is positioned may also be used as the merge candidate. For example, a co-located block with the current block within the reference picture or blocks adjacent to the co-located block may be additionally used as the merge candidate. If the number of merge candidates selected by the method described above is smaller than a preset number, a zero vector is added to the merge candidate.

The inter predictor 124 configures a merge list including a predetermined number of merge candidates by using the neighboring blocks. A merge candidate to be used as the motion information of the current block is selected from the merge candidates included in the merge list, and merge index information for identifying the selected candidate is generated. The generated merge index information is encoded by the entropy encoder 155 and delivered to the video decoding apparatus.

A merge skip mode is a special case of the merge mode. After quantization, when all transform coefficients for entropy encoding are close to zero, only the neighboring block selection information is transmitted without transmitting residual signals. By using the merge skip mode, it is possible to achieve a relatively high encoding efficiency for images with slight motion, still images, screen content images, and the like.

Hereafter, the merge mode and the merge skip mode are collectively referred to as the merge/skip mode.

Another method for encoding the motion information is an advanced motion vector prediction (AMVP) mode.

In the AMVP mode, the inter predictor 124 derives motion vector predictor candidates for the motion vector of the current block by using the neighboring blocks of the current block. As a neighboring block used for deriving the motion vector predictor candidates, all or some of a left block A0, a bottom left block A1, a top block B0, a top right block B1, and a top left block B2 adjacent to the current block in the current picture illustrated in FIG. 4 may be used. Further, a block positioned within the reference picture (may be the same as or different from the reference picture used for predicting the current block) other than the current picture at which the current block is positioned may also be used as the neighboring block used for deriving the motion vector predictor candidates. For example, a co-located block with the current block within the reference picture or blocks adjacent to the co-located block may be used. If the number of motion vector candidates selected by the method described above is smaller than a preset number, a zero vector is added to the motion vector candidate.

The inter predictor 124 derives the motion vector predictor candidates by using the motion vector of the neighboring blocks and determines motion vector predictor for the motion vector of the current block by using the motion vector predictor candidates. In addition, a motion vector difference is calculated by subtracting motion vector predictor from the motion vector of the current block.

The motion vector predictor may be acquired by applying a pre-defined function (e.g., center value and average value computation, and the like) to the motion vector predictor candidates. In this case, the video decoding apparatus also knows the pre-defined function. Further, since the neighboring block used for deriving the motion vector predictor candidate is a block in which encoding and decoding are already completed, the video decoding apparatus may also already know the motion vector of the neighboring block. Therefore, the video encoding apparatus does not need to encode information for identifying the motion vector predictor candidate. Accordingly, in this case, information on the motion vector difference and information on the reference picture used for predicting the current block are encoded.

Meanwhile, the motion vector predictor may also be determined by a scheme of selecting any one of the motion vector predictor candidates. In this case, information for identifying the selected motion vector predictor candidate is additional encoded jointly with the information on the motion vector difference and the information on the reference picture used for predicting the current block.

The subtractor 130 generates a residual block by subtracting the prediction block generated by the intra predictor 122 or the inter predictor 124 from the current block.

The transformer 140 transforms residual signals in a residual block having pixel values of a spatial domain into transform coefficients of a frequency domain. The transformer 140 may transform residual signals in the residual block by using a total size of the residual block as a transform unit or also split the residual block into a plurality of subblocks and may perform the transform by using the subblock as the transform unit. Alternatively, the residual block is divided into two subblocks, which are a transform area and a non-transform area, to transform the residual signals by using only the transform area subblock as the transform unit. Here, the transform area subblock may be one of two rectangular blocks having a size ratio of 1:1 based on a horizontal axis (or vertical axis). In this case, a flag (cu_sbt_flag) indicates that only the subblock is transformed, and directional (vertical/horizontal) information (cu_sbt_horizontal_flag) and/or positional information (cu_sbt_pos_flag) are encoded by the entropy encoder 155 and signaled to the video decoding apparatus. Further, a size of the transform area subblock may have a size ratio of 1:3 based on the horizontal axis (or vertical axis). In this case, a flag (cu_sbt_quad_flag) dividing the corresponding splitting is additionally encoded by the entropy encoder 155 and signaled to the video decoding apparatus.

Meanwhile, the transformer 140 may perform the transform for the residual block individually in a horizontal direction and a vertical direction. For the transform, various types of transform functions or transform matrices may be used. For example, a pair of transform functions for horizontal transform and vertical transform may be defined as a multiple transform set (MTS). The transformer 140 may select one transform function pair having highest transform efficiency in the MTS and may transform the residual block in each of the horizontal and vertical directions. Information (mts_idx) on the transform function pair in the MTS is encoded by the entropy encoder 155 and signaled to the video decoding apparatus.

The quantizer 145 quantizes the transform coefficients output from the transformer 140 using a quantization parameter and outputs the quantized transform coefficients to the entropy encoder 155. The quantizer 145 may also immediately quantize the related residual block without the transform for any block or frame. The quantizer 145 may also apply different quantization coefficients (scaling values) according to positions of the transform coefficients in the transform block. A quantization matrix applied to quantized transform coefficients arranged in 2 dimensional may be encoded and signaled to the video decoding apparatus.

The rearrangement unit 150 may perform realignment of coefficient values for quantized residual values.

The rearrangement unit 150 may change a 2D coefficient array to a 1D coefficient sequence by using coefficient scanning. For example, the rearrangement unit 150 may output the 1D coefficient sequence by scanning a DC coefficient to a high-frequency domain coefficient by using a zig-zag scan or a diagonal scan. According to the size of the transform unit and the intra prediction mode, vertical scan of scanning a 2D coefficient array in a column direction and horizontal scan of scanning a 2D block type coefficient in a row direction may also be used instead of the zig-zag scan. In other words, according to the size of the transform unit and the intra prediction mode, a scan method to be used may be determined among the zig-zag scan, the diagonal scan, the vertical scan, and the horizontal scan.

The entropy encoder 155 generates a bitstream by encoding a sequence of 1D quantized transform coefficients output from the rearrangement unit 150 by using various encoding schemes including a Context-based Adaptive Binary Arithmetic Code (CABAC), an Exponential Golomb, or the like.

Further, the entropy encoder 155 encodes information, such as a CTU size, a CTU split flag, a QT split flag, an MTT split type, an MTT split direction, etc., related to the block splitting to allow the video decoding apparatus to split the block equally to the video encoding apparatus. Further, the entropy encoder 155 encodes information on a prediction type indicating whether the current block is encoded by intra prediction or inter prediction. The entropy encoder 155 encodes intra prediction information (i.e., information on an intra prediction mode) or inter prediction information (in the case of the merge mode, a merge index and in the case of the AMVP mode, information on the reference picture index and the motion vector difference) according to the prediction type. Further, the entropy encoder 155 encodes information related to quantization, i.e., information on the quantization parameter and information on the quantization matrix.

The inverse quantizer 160 dequantizes the quantized transform coefficients output from the quantizer 145 to generate the transform coefficients. The inverse transformer 165 transforms the transform coefficients output from the inverse quantizer 160 into a spatial domain from a frequency domain to reconstruct the residual block.

The adder 170 adds the reconstructed residual block and the prediction block generated by the predictor 120 to reconstruct the current block. Pixels in the reconstructed current block may be used as reference pixels when intra-predicting a next-order block.

The loop filter unit 180 performs filtering for the reconstructed pixels in order to reduce blocking artifacts, ringing artifacts, blurring artifacts, etc., which occur due to block based prediction and transform/quantization. The loop filter unit 180 as an in-loop filter may include all or some of a deblocking filter 182, a sample adaptive offset (SAO) filter 184, and an adaptive loop filter (ALF) 186.

The deblocking filter 182 filters a boundary between the reconstructed blocks in order to remove a blocking artifact, which occurs due to block unit encoding/decoding, and the SAO filter 184 and the ALF 186 perform additional filtering for a deblocked filtered video. The SAO filter 184 and the ALF 186 are filters used for compensating differences between the reconstructed pixels and original pixels, which occur due to lossy coding. The SAO filter 184 applies an offset as a CTU unit to enhance a subjective image quality and encoding efficiency. On the other hand, the ALF 186 performs block unit filtering and compensates distortion by applying different filters by dividing a boundary of the corresponding block and a degree of a change amount. Information on filter coefficients to be used for the ALF may be encoded and signaled to the video decoding apparatus.

The reconstructed block filtered through the deblocking filter 182, the SAO filter 184, and the ALF 186 is stored in the memory 190. When all blocks in one picture are reconstructed, the reconstructed picture may be used as a reference picture for inter predicting a block within a picture to be encoded afterwards.

The video encoding apparatus may store a bitstream of encoded video data in a non-transitory storage medium or transmit the bitstream to the video decoding device through a communication network.

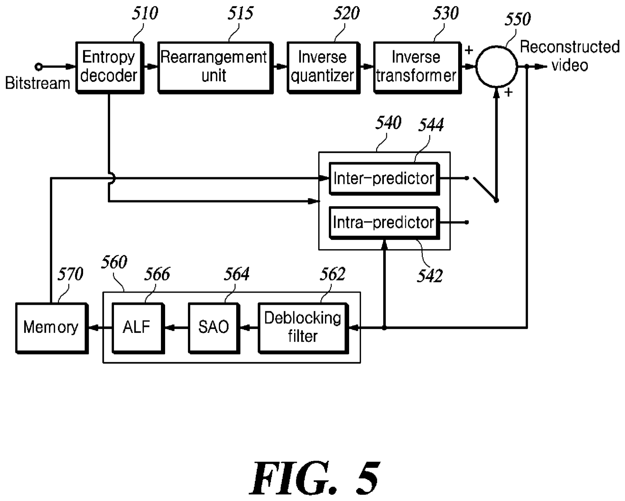

FIG. 5 is a functional block diagram of a video decoding apparatus that may implement the technologies of the present disclosure. Hereinafter, referring to FIG. 5, the video decoding apparatus and components of the apparatus are described.

The video decoding apparatus may include an entropy decoder 510, a rearrangement unit 515, an inverse quantizer 520, an inverse transformer 530, a predictor 540, an adder 550, a loop filter unit 560, and a memory 570.

Similar to the video encoding apparatus of FIG. 1, each component of the video decoding apparatus may be implemented as hardware or software or implemented as a combination of hardware and software. Further, a function of each component may be implemented as the software, and a microprocessor may also be implemented to execute the function of the software corresponding to each component.

The entropy decoder 510 extracts information related to block splitting by decoding the bitstream generated by the video encoding apparatus to determine a current block to be decoded and extracts prediction information required for reconstructing the current block and information on the residual signals.

The entropy decoder 510 determines the size of the CTU by extracting information on the CTU size from a sequence parameter set (SPS) or a picture parameter set (PPS) and splits the picture into CTUs having the determined size. In addition, the CTU is determined as a highest layer of the tree structure, i.e., a root node, and split information for the CTU may be extracted to split the CTU by using the tree structure.

For example, when the CTU is split by using the QTBTTT structure, a first flag (QT_split_flag) related to splitting of the QT is first extracted to split each node into four nodes of the lower layer. In addition, a second flag (mtt_split_flag), a split direction (vertical/horizontal), and/or a split type (binary/ternary) related to splitting of the MTT are extracted with respect to the node corresponding to the leaf node of the QT to split the corresponding leaf node into an MTT structure. As a result, each of the nodes below the leaf node of the QT is recursively split into the BT or TT structure.

As another example, when the CTU is split by using the QTBTTT structure, a CU split flag (split_cu_flag) indicating whether the CU is split is extracted. When the corresponding block is split, the first flag (QT_split_flag) may also be extracted. During a splitting process, with respect to each node, recursive MTT splitting of 0 times or more may occur after recursive QT splitting of 0 times or more. For example, with respect to the CTU, the MTT splitting may immediately occur, or on the contrary, only QT splitting of multiple times may also occur.

As another example, when the CTU is split by using the QTBT structure, the first flag (QT_split_flag) related to the splitting of the QT is extracted to split each node into four nodes of the lower layer. In addition, a split flag (split_flag) indicating whether the node corresponding to the leaf node of the QT is further split into the BT, and split direction information are extracted.

Meanwhile, when the entropy decoder 510 determines a current block to be decoded by using the splitting of the tree structure, the entropy decoder 510 extracts information on a prediction type indicating whether the current block is intra predicted or inter predicted. When the prediction type information indicates the intra prediction, the entropy decoder 510 extracts a syntax element for intra prediction information (intra prediction mode) of the current block. When the prediction type information indicates the inter prediction, the entropy decoder 510 extracts information representing a syntax element for inter prediction information, i.e., a motion vector and a reference picture to which the motion vector refers.

Further, the entropy decoder 510 extracts quantization related information and extracts information on the quantized transform coefficients of the current block as the information on the residual signals.

The rearrangement unit 515 may change a sequence of 1D quantized transform coefficients entropy-decoded by the entropy decoder 510 to a 2D coefficient array (i.e., block) again in a reverse order to the coefficient scanning order performed by the video encoding apparatus.

The inverse quantizer 520 dequantizes the quantized transform coefficients and dequantizes the quantized transform coefficients by using the quantization parameter. The inverse quantizer 520 may also apply different quantization coefficients (scaling values) to the quantized transform coefficients arranged in 2D. The inverse quantizer 520 may perform dequantization by applying a matrix of the quantization coefficients (scaling values) from the video encoding apparatus to a 2D array of the quantized transform coefficients.

The inverse transformer 530 generates the residual block for the current block by reconstructing the residual signals by inversely transforming the dequantized transform coefficients into the spatial domain from the frequency domain.

Further, when the inverse transformer 530 inversely transforms a partial area (subblock) of the transform block, the inverse transformer 530 extracts a flag (cu_sbt_flag) that only the subblock of the transform block is transformed, directional (vertical/horizontal) information (cu_sbt_horizontal_flag) of the subblock, and/or positional information (cu_sbt_pos_flag) of the subblock. The inverse transformer 530 also inversely transforms the transform coefficients of the corresponding subblock into the spatial domain from the frequency domain to reconstruct the residual signals and fills an area, which is not inversely transformed, with a value of "0" as the residual signals to generate a final residual block for the current block.

Further, when the MTS is applied, the inverse transformer 530 determines the transform index or the transform matrix to be applied in each of the horizontal and vertical directions by using the MTS information (mts_idx) signaled from the video encoding apparatus. The inverse transformer 530 also performs inverse transform for the transform coefficients in the transform block in the horizontal and vertical directions by using the determined transform function.

The predictor 540 may include an intra predictor 542 and an inter predictor 544. The intra predictor 542 is activated when the prediction type of the current block is the intra prediction, and the inter predictor 544 is activated when the prediction type of the current block is the inter prediction.

The intra predictor 542 determines the intra prediction mode of the current block among the plurality of intra prediction modes from the syntax element for the intra prediction mode extracted from the entropy decoder 510. The intra predictor 542 also predicts the current block by using neighboring reference pixels of the current block according to the intra prediction mode.

The inter predictor 544 determines the motion vector of the current block and the reference picture to which the motion vector refers by using the syntax element for the inter prediction mode extracted from the entropy decoder 510.

The adder 550 reconstructs the current block by adding the residual block output from the inverse transformer 530 and the prediction block output from the inter predictor 544 or the intra predictor 542. Pixels within the reconstructed current block are used as a reference pixel upon intra predicting a block to be decoded afterwards.

The loop filter unit 560 as an in-loop filter may include a deblocking filter 562, an SAO filter 564, and an ALF 566. The deblocking filter 562 performs deblocking filtering a boundary between the reconstructed blocks in order to remove the blocking artifact, which occurs due to block unit decoding. The SAO filter 564 and the ALF 566 perform additional filtering for the reconstructed block after the deblocking filtering in order to compensate differences between the reconstructed pixels and original pixels, which occur due to lossy coding. The filter coefficients of the ALF are determined by using information on filter coefficients decoded from the bitstream.

The reconstructed block filtered through the deblocking filter 562, the SAO filter 564, and the ALF 566 is stored in the memory 570. When all blocks in one picture are reconstructed, the reconstructed picture may be used as a reference picture for inter predicting a block within a picture to be encoded afterwards.

The following embodiments may be performed by various components in the video encoding apparatus. In addition, they may be performed by various components in the video decoding apparatus.

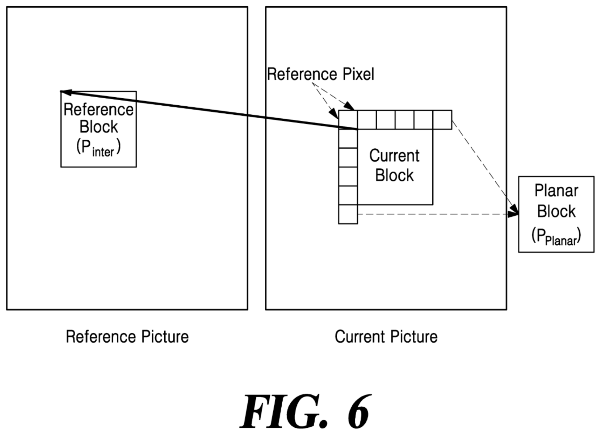

FIG. 6 is a diagram illustrating a method generating a prediction block of the current block in the combined inter/intra prediction mode (CIIP mode). In the CIIP mode, an inter-prediction block of the current block may be generated in the same manner as in the regular merge mode. An intra-prediction block may be generated by applying the planar mode to the neighboring reference pixels of the current block. Applying weights to the generated inter-prediction block and intra-prediction block can generate the final prediction block based on CIIP.

Referring to FIG. 6, a reference block $P_{inter}$ within the reference picture may be derived based on the merge mode. The intra-prediction block $P_{Planar}$ may be generated by applying the planar mode to the neighboring reference pixels of the current block. Applying weights to the reference block $P_{inter}$ and intra-prediction block $P_{Planar}$ can generate the CIIP-based prediction block $P_{CIIP}$. The CIIP-based prediction block $P_{CIIP}$ may be generated by using an equation,

$$P_{CIIP} = \left((4 - w) \times P_{inter} + w \times P_{Planar} + 2\right) \gg 2 \ .$$

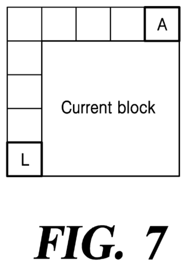

FIG. 7 is a diagram illustrating the neighboring blocks referenced to determine the weight in the CIIP mode, according to at least one embodiment of the present disclosure. In CIIP mode, the weight may be determined by taking into accout whether the neighboring blocks adjacent to the current block are encoded in intra-prediction mode.

Referring to FIG. 7, in CIIP mode, the weight may be determined by taking into accout whether the neighboring block A adjacent to the top of the current block is encoded in intra-prediction mode and whether the neighboring block L adjacent to the left of the current block is encoded in intra-prediction mode.

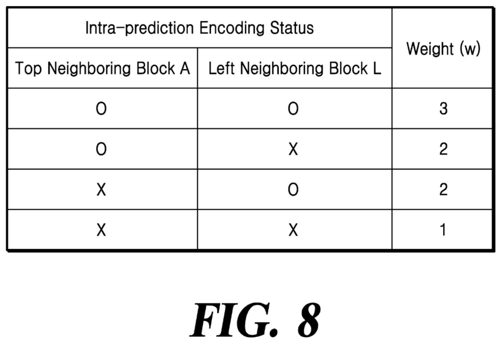

FIG. 8 is a diagram illustrating a method of determining weights in the CIIP mode, according to at least one embodiment of the present disclosure. If the neighboring blocks adjacent to the current block are encoded in intra-prediction mode by a large quantity, a large weight may be assigned to the intra-prediction block. Conversely, if the neighboring blocks adjacent to the current block are encoded less frequently in intra-prediction mode, a smaller weight may be assigned to the intra-prediction block.

Referring to FIG. 8, if the top neighboring block A above the current block and the left neighboring block L of the current block in FIG. 7 are encoded in intra-prediction mode, the weight assigned to the intra-prediction block may be 3. If the top neighboring block A is encoded in intra-prediction mode and the left neighboring block L is not encoded in intra-prediction mode, the weight assigned to the intra-prediction block may be 2. If the top neighboring block A is not encoded in intra-prediction mode and the left neighboring block L is encoded in intra-prediction mode, the weight assigned to the intra-prediction block may be 2. If the top neighboring block A is not encoded in intra-prediction mode and the left neighboring block L is not encoded in intra-prediction mode, the weight assigned to the intra-prediction block may be 1.

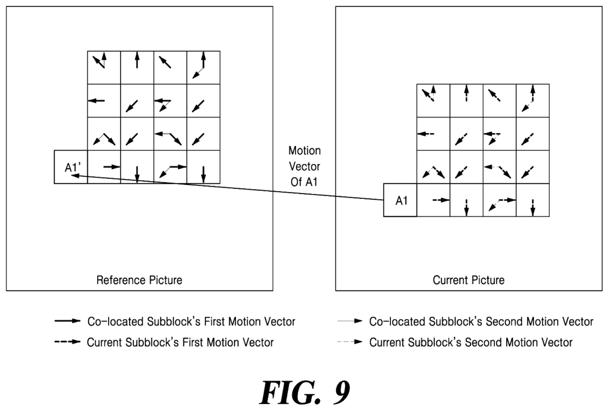

FIG. 9 is a diagram illustrating a method of determining motion vectors in subblock unit, according to at least one embodiment of the present disclosure.

Referring to FIG. 9, Subblock-based Temporal Motion Vector Prediction (SbTMVP) utilizes motion information within a co-located picture to improve the prediction of motion vector for each subblock in merge mode. Each subblock is one of the blocks generated by partitioning the current block, and the co-located picture is a picture that includes a co-located block. If the reference picture of the neighboring block A1 adjacent to the bottom-left corner of the current block is the same as the co-located picture, SbTMVP applies motion shift by using the motion vector of the neighboring block A1 within the current picture. If the reference picture of the neighboring block A1 adjacent to the bottom-left corner of the current block is not the same as the co-located picture, SbTMVP uses a zero motion vector.

SbTMVP applies motion shift to the co-located block in the co-located picture. SbTMVP extracts for each subblock the co-located picture's internal co-located subblock's motion information that is motion vector and reference picture indices. Here, each co-located subblock's center position's motion information may be extracted. Each subblock may have a size of 8x8. SbTMVP applies temporal motion scaling to the extracted motion information to generate motion information for each subblock. SbTMVP extracts for each subblock the co-located picture's internal co-located subblock's first motion vector and second motion vector. SbTMVP scales the co-located subblock's first motion vector and the co-located subblock's second motion vector to generate the motion vector of the current block's subblock (hereinafter referred to as the current subblock). The co-located subblock's first motion vector and the co-located subblock's second motion vector when scaled generate the current subblock's first motion vector and the current subblock's second motion vector.

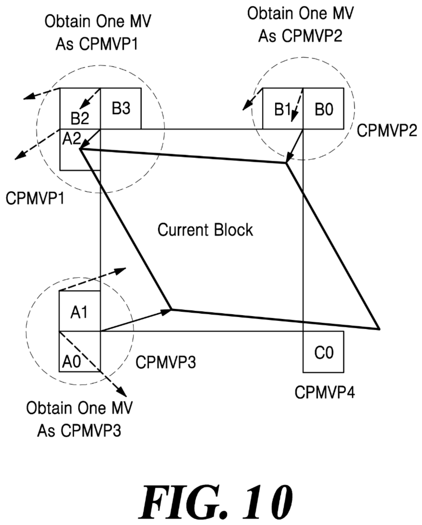

FIG. 10 is a diagram illustrating the pixel-wise calculation of an affine model, according to at least one embodiment of the present disclosure.

Referring to FIG. 10, the video decoding apparatus utilizes the possibility that the current block and neighboring blocks share the identical or similar pixel values and motion information. The video decoding apparatus uses the motion vector of the adjacent block to the positions corresponding to the corner points A, B, and C of the current block to predict the corresponding control point motion vectors (CPMVs). The video decoding apparatus uses the control point motion vectors to perform modeling of the geometric transform relationship between the current block and the prediction block, i.e., the affine model, and then performs prediction of the current block based on the modeled transform relationship. The illustration of FIG. 10 presents a 6-parameter affine model using the control point motion vectors at the three points A, B, and C, but some embodiments may use a 4-parameter affine model using the control point motion vectors at two points A and B or A and C. Depending on the 4-parameter affine model or 6-parameter affine model, the motion vectors ($mv_x$, $mv_y$) at the target block (x, y) pixels may be expressed by using the control point motion vectors and the pixels' positions, respectively, as shown in Equation 1 and Equation 2.

$$\begin{cases} mv_x = \dfrac{cpmv_{2x} - cpmv_{1x}}{W}x - \dfrac{cpmv_{2y} - cpmv_{1y}}{W}y + cpmv_{1x} \\ mv_y = \dfrac{cpmv_{2y} - cpmv_{1y}}{W}x + \dfrac{cpmv_{2x} - cpmv_{1x}}{W}y + cpmv_{1y} \end{cases} \qquad \text{Equation 1}$$

$$\begin{cases} mv_x = \dfrac{cpmv_{2x} - cpmv_{1x}}{W}x + \dfrac{cpmv_{3x} - cpmv_{1x}}{H}y + cpmv_{1x} \\ mv_y = \dfrac{cpmv_{2y} - cpmv_{1y}}{W}x + \dfrac{cpmv_{3y} - cpmv_{1y}}{H}y + cpmv_{1y} \end{cases} \qquad \text{Equation 2}$$

Here, W and H are the width and height of the current block. ($cpmv_{ix}$, $cpmv_{iy}$) is the motion vector at the i-th control point. The predicted values for the respective pixels of the current block may be produced by using the motion vectors calculated according to Equation 1 or Equation 2. Although not included in the affine model, as shown in the example in FIG. 10, CPMVP4 may be defined for position D. Since position D is a pixel that has not yet been reconstructed, the motion vector of the co-located pixel in the reference picture may be used in place of CPMVP4.

In the example of FIG. 10, CPMVP represents the control point motion vector predictor in an affine AMVP mode. In an affine merge mode, since the motion vector difference (MVD) is not transmitted, CPMVP is the same as CPMV. In the affine AMVP mode, since the motion vector difference is transmitted, CPMV may be calculated by summing CPMVP and MVD. FIG. 10 illustrates using a combination or construction among methods of generating a control point motion vector predictor in the affine AMVP mode. The affine merge mode and affine AMVP mode will be described below.

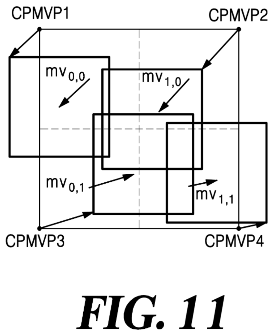

FIG. 11 is a diagram illustrating the calculation of an affine model by using a centroid vector, according to at least one embodiment of the present disclosure.

Additionally, to reduce computational complexity in some embodiments, the video decoding apparatus may perform block-based prediction by using each control point motion vector for the centroid vector, as illustrated in FIG. 11. In this case, assuming that the current block has four control point motion vectors, the current block may be partitioned into four blocks. In the method illustrated in FIG. 11, blocks using each control point motion vector as the centroid vector may be predicted according to the same motion vector. Although this may have a lower prediction accuracy than the pixel-wise calculation embodiment, it can reduce the computational complexity.

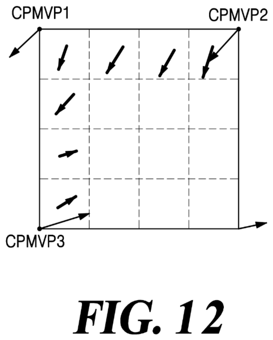

FIG. 12 is a diagram illustrating the subblock-wise calculation of an affine model, according to at least one embodiment of the present disclosure.

As another embodiment, to reduce computational complexity, the video decoding apparatus may perform prediction in subblock unit, as illustrated in FIG. 12. If the width or height of the current block is larger than the width or height of the subblock, the video decoding apparatus may partition the current block into subblocks. The video decoding apparatus uses the control point motion vectors of the current block to derive the control point motion vectors at the respective corner point positions of the partitioned subblocks, and then derive a representative motion vector from among the control point motion vectors of each subblock. The video decoding apparatus uses the derived representative motion vector to generate a prediction block for each subblock, and then combines the prediction blocks in subblock units to generate a first prediction block of the current block.

In some embodiments, the video decoding apparatus may filter the first prediction block to generate a second prediction block. Thereafter, the video decoding apparatus may generate the final prediction block of the current block by using one of the first prediction block and the second prediction block.

To reduce the amount of bits required to encode the control point motion vectors, the aforementioned regular method of inter prediction (translational motion prediction) method, i.e., the affine merge mode and the affine AMVP mode, may be applied. Hereinafter, the affine merge mode and affine AMVP mode are referred to as control point motion vector prediction methods.

In one example, when in the affine merge mode, the inter predicting unit 124 of the video encoding apparatus organizes a predefined number of (e.g., 5) affine merge candidate lists. First, the video encoding apparatus derives inherited affine merge candidates from the neighboring blocks of the target block. For example, by deriving a predefined number of inherited affine merge candidates from the neighboring samples A0, A1, B0, B1, and B2 of the target block shown in FIG. 4, a merge candidate list is generated. Each of the inherited affine merge candidates in the candidate list corresponds to a combination of two or three CPMVs (control point motion vectors).

The video encoding apparatus derives the inherited affine merge candidates from control point motion vectors of the target block's neighboring blocks that are predicted in affine mode. Some embodiments may limit the number of merge candidates derived from the neighboring blocks predicted in affine mode. For example, the video encoding apparatus may derive from the neighboring blocks predicted in affine mode, two inherited affine merge candidates, one of A0 and A1, and one of B0, B1, and B2. The prioritization may be in the order of A0, A1, and then the order of B0, B1, and B2.

On the other hand, if the total number of merge candidates is more than three, the video encoding apparatus may derive the required number of supplementary constructed affine merge candidates from the translational motion vectors of the neighboring blocks, as shown in the example in FIG. 10.

The video encoding apparatus derives control point motion vectors CPMV1, CPMV2, and CPMV3 each from neighboring blocks group {B2, B3, A2}, neighboring blocks group {B1, B0}, and neighboring blocks group {A1, A0}. As one example, the prioritization within each neighboring block group may be in the order of B2, B3, and A2, the order of B1 and B0, and the order of A1 and A0. A further control point motion vector CPMV4 is derived from the co-located block in the reference picture. The video encoding apparatus combines two or three control point motion vectors out of the four control point motion vectors to generate the required number of supplementary constructed affine merge candidates. The prioritization of the combinations is as follows. The elements within the respective groups are listed in the following order: control point motion vectors at the top-left corner, top-right corner, and then bottom-left corner.

{CPMV1, CPMV2, CPMV3}, {CPMV1, CPMV2, CPMV4}, {CPMV1, CPMV3, CPMV4}, {CPMV2, CPMV3, CPMV4}, {CPMV1, CPMV2}, {CPMV1, CPMV3}

If the merge candidate list cannot be filled up by using the inherited affine merge candidates and constructed affine merge candidates, the video encoding apparatus may add a zero motion vector as a candidate.

The video encoding apparatus selects a merge candidate from the merge candidate list in terms of optimizing coding efficiency, and determines a merge index that indicates the merge candidate. The video encoding apparatus uses the selected merge candidate to perform an affine motion prediction on the target block. When the merge candidate is composed of two control point motion vectors, an affine motion prediction is performed by using a four-parameter affine model. On the other hand, when the merge candidate is composed of three control point motion vectors, an affine motion prediction is performed by using a six-parameter affine model. The video encoding apparatus encodes and signals the merge index to the video decoding apparatus.

The video decoding apparatus decodes the merge index. The inter predicting unit 544 of the video decoding apparatus constructs a merge candidate list in the same manner as the video encoding apparatus does, and performs affine motion prediction by using control point motion vectors corresponding to the merge candidates indicated by the merge index.

As another example, in the affine AMVP mode, from the perspective of coding efficiency optimization, the inter predictiing unit 124 of the video encoding apparatus determines the type of the affine model and its resultant actual control point motion vectors for the target block. The video encoding apparatus calculates the MVD for each control point, which is the difference between the actual control point motion vector and each control point's MVP that is control point motion vector predictor, and then encodes the MVD at each control point. To derive each control point motion vector predictor, the inter predicting unit 124 constructs a list of a predefined number, e.g., 2 of affine AMVP candidates. When the target block is of the 4-parameter type, the affine AMVP candidates included in the list are each composed of a pair of two control point motion vectors. On the other hand, when the target block is of the 6-parameter type, the affine AMVP candidates included in the list are each composed of a pair of three control point motion vectors.

Hereinafter, the method of constructing a candidate list in affine AMVP mode is described. The affine AMVP candidate list may be derived in a manner similar to the method of constructing the affine merge candidate list described above.

The video encoding apparatus checks whether the reference picture of the inherited affine AMVP candidate is the same as the reference picture of the current block. Here, the inherited affine AMVP candidate may be a block predicted in affine mode among the neighboring blocks A0, A1, B0, B1, and B2 of the target block shown in FIG. 4, as in the affine merge mode described above.

If the reference picture of the inherited affine AMVP candidate is the same as the reference picture of the current block, the video encoding apparatus adds the inherited affine AMVP candidate.

On the other hand, if the reference picture of the inherited affine AMVP candidate is not the same as the reference picture of the current block, the video encoding apparatus checks whether the reference pictures of all CPMVs (control point motion vectors) of the constructed affine AMVP candidate are the same as the reference picture of the current block. Here, all CPMVs of the constructed affine AMVP candidate may be derived from the motion vectors of the neighboring samples shown in FIG. 10, as in the affine merge mode described above. If the reference picture of all CPMVs of the constructed affine AMVP candidate is the same as the reference picture of the current block, the video encoding apparatus adds such a constructed affine AMVP candidate.

At this point, the affine model type of the target block needs to be considered. If the affine model type of the target block is a 4-parameter type, the video encoding apparatus derives two control point motion vectors that are the top-left corner and top-right corner control point motion vectors of the target block by using the affine model of the neighboring block. If the affine model type of the target block is a 6-parameter type, three control point motion vectors of the target block's top-left, top-right, and bottom-left control point motion vectors are derived by using the affine model of the neighboring blocks.

If the reference pictures of all CPMVPs are not the same as the reference picture of the current block, the video encoding apparatus adds a translational motion vector as an affine AMVP candidate.

If the candidate list cannot be filled up, i.e., the preset candidate number cannot be filled even with the above processes, the video encoding apparatus adds a zero motion vector as an affine AMVP candidate.

The video encoding apparatus selects one candidate from the affine AMVP list and determines the candidate index indicating the selected candidate. At this time, each control point motion vector of the selected candidate corresponds to each control point motion vector predictor. From the perspective of coding efficiency optimization, the video encoding apparatus determines the actual control point motion vector for each control point of the target block, and then calculates the MVD between the actual control point motion vector and the control point motion vector predictor. The video encoding apparatus encodes the target block's affine model type, candidate index, and the MVD at each control point, and signals them to the video decoding apparatus.

The video decoding apparatus decodes the affine model type, candidate index, and MVD at each control point. The inter predicting unit 544 of the video decoding apparatus generates an affine AMVP list in the same manner as the video encoding apparatus does and selects a candidate indicated by the candidate index within the affine AMVP list. The video decoding apparatus sums each control point motion vector predictor of the selected candidate and its corresponding MVD to reconstruct the motion vector at each control point. The video decoding apparatus performs affine motion prediction by using the reconstructed control point motion vectors.

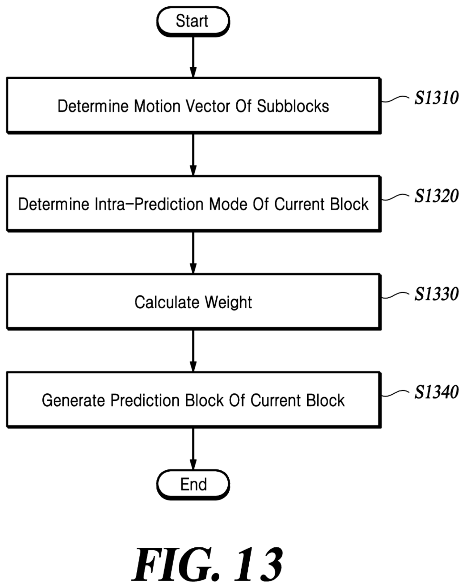

FIG. 13 is a flowchart of the process of generating a prediction block of the current block by performing a subblock-wise prediction in the CIIP mode, according to at least one embodiment of the present disclosure.

Referring to FIG. 13, the video decoding apparatus determines the motion vectors of the subblocks (S1310). The video decoding apparatus may generate the motion vectors of the subblocks by using SbTMVP (Subblock-based Temporal Motion Vector Prediction). Here, the size of the subblocks may be 8x8 each. An index indicating whether SbTMVP is to be used may be signaled. The video decoding apparatus sequentially searches for the motion vectors of up to N neighboring blocks adjacent to the current block to identify neighboring blocks whose reference pictures are the same as the reference picture of the current block. The video decoding apparatus applies motion shift by using the motion vectors of the neighboring blocks whose reference pictures are the same as the current block's reference picture, among the N neighboring blocks.

When there are multiple neighboring blocks among the N neighboring blocks, whose reference pictures are the same as the current block's reference picture, the video decoding apparatus uses a parsed index to apply motion shift by using the motion vector of one of the multiple neighboring blocks. When there is only one neighboring block among N neighboring blocks, whose reference picture is the same as the current block's reference picture, no index may be parsed. The video decoding apparatus generates merge candidates of the current block by using the motion vectors of the subblocks generated by using SbTMVP.

The video decoding apparatus generates merge candidates of the current block by using an affine model. The video decoding apparatus generates a subblock's merge candidate by using at least one of an inherited affine merge candidate, a constructed affine merge candidate, a history-based affine merge candidate, or a pair-wise affine merge candidate. Here, the history-based affine merge candidate is a merge candidate generated by using a history parameter table that stores the neighboring blocks adjacent to the current block and affine parameters. The pair-wise affine merge candidate is a merge candidate generated by using a new CPMV (control point motion vector) generated by averaging two CPMVs.

The video decoding apparatus generates merge candidates of the current block by using at least one of SbTMVP or the affine model and thereby generates a merge candidate list of the current block. The video decoding apparatus may generate K merge candidates based on SbTMVP and L merge candidates based on the affine model, and use the K+L merge candidates to generate a merge candidate list of the current block.

The video decoding apparatus may use M merge candidates with low template costs from the merge candidate list of the current block to generate a final merge candidate list of the current block. The template cost is calculated by using the template adjacent to the subblock and the template of the co-located subblock within the reference picture. The video decoding apparatus determines the motion vectors of the subblocks by using the final merge candidate list of the current block. The video decoding apparatus generates inter-prediction blocks of the subblocks by using the motion vectors of the subblocks.

The video decoding apparatus determines the intra-prediction mode of the current block (S1320). The intra-prediction mode of the current block may be implicitly determined to be a specific mode. For example, the intra-prediction mode of the current block may be determined to be planar mode. The video decoding apparatus may determine the intra-prediction mode of the current block by using a gradient histogram. The video decoding apparatus applies a Sobel filter to the reference pixels neighboring the current block to calculate the gradients of the reference pixels, and generates a gradient histogram by using the calculated gradients. The video decoding apparatus selects N gradients in order of magnitude from the gradient histogram and maps the N gradients respectively to N intra-prediction modes. The video decoding apparatus determines the intra-prediction mode of the current block by using the N intra-prediction modes. The video decoding apparatus generates an intra-prediction block of the current block by using the intra-prediction mode of the current block.

The video decoding apparatus may determine the intra-prediction mode of the current block by using the template-based intra-prediction mode determination method. The video decoding apparatus generates a predicted template by applying the directionality of each candidate mode in the most probable mode list (MPM list) of the current block to the reference pixel of the template of the current block. The video decoding apparatus calculates the SATD or SAD between the pixels of the predicted template and the pixels of the reconstructed template. The video decoding apparatus may determine the mode with the smallest SATD or SAD among the candidate modes in the MPM list as the intra-prediction mode of the current block. The video decoding apparatus uses the intra-prediction mode of the current block to generates an intra-prediction block of the current block.

In another embodiment, the video decoding apparatus generates a prediction template by applying the directional information of predefined M intra-prediction modes out of N intra-prediction modes of the current block to the reference pixel of the template of the current block. For example, the N intra-prediction modes may include 67 intra-prediction modes plus wide-angle intra-prediction modes. The video decoding apparatus calculates the SATD or SAD between the pixels of the predicted template and the pixels of the reconstructed template. The video decoding apparatus may determine the intra-prediction mode with the smallest SATD or SAD among M intra-prediction modes as the intra-prediction mode of the current block. The video decoding apparatus uses the intra-prediction mode of the current block to generate an intra-prediction block of the current block. Here, Step S1320 may be performed first, followed by Step S1310.

The video decoding apparatus calculates the weights used to weighted sum the inter-prediction blocks of the subblocks and the intra-prediction block of the current block (S1330). The video decoding apparatus calculates the weights by using whether intra-prediction is applied to neighboring blocks adjacent to the current block and whether inter-prediction is applied to neighboring blocks adjacent to the current block. The video decoding apparatus generates the prediction block of the current block (S1340). The video decoding apparatus weighted sums the inter-prediction blocks of the subblocks and the intra-prediction block of the current block to generate a prediction block of the current block. The video decoding apparatus determines a weight function by using the determination positions of the motion vectors of the subblocks in SbTMVP and generates a prediction block of the current block by using the weight function.

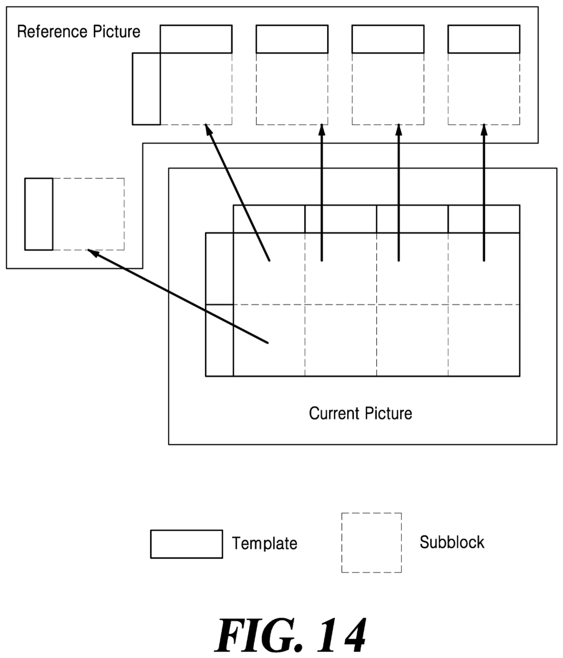

FIG. 14 is a diagram illustrating a method of calculating the template costs of subblocks, according to at least one embodiment of the present disclosure.

Referring to FIG. 14, the video decoding apparatus generates merge candidates of the current block by using at least one of SbTMVP or affine model to generate a merge candidate list of the current block. The video decoding apparatus may generate a final merge candidate list of the current block by using M merge candidates with low template costs from the merge candidate list of the current block. The video decoding apparatus calculates the SATD or SAD between the templates of the current subblocks and the templates of the co-located subblocks in the reference pictures. Here, the reference pictures are determined based on the candidate modes in the merge candidate list of the current block. The video decoding apparatus may generate a final merge candidate list of the current block by using M merge candidates sequentially with the smaller SATD or SAD first from the merge candidate list of the subblock.

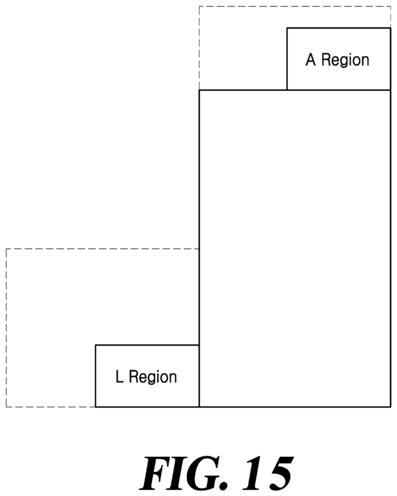

FIG. 15 is a diagram illustrating a method of determining the weights used to perform a weighted summation of the inter-prediction blocks of the subblocks and the intra-prediction block of the current block in CIIP mode, according to at least one embodiment of the present disclosure.

Referring to FIG. 15, the present disclosure determines the weights used to perform weighted summation of the inter-prediction blocks of the subblocks and the intra-prediction block of the current block, by using information which includes whether intra-prediction is applied to the blocks in an A region adjacent to the top of the current block and whether inter-prediction is applied to the blocks in the A region adjacent to the top of the current block. The present disclosure determines the weights used to perform the weighted sum of the inter-prediction blocks of the subblocks and the intra-prediction block of the current block, by using information which includes whether intra-prediction is applied to the blocks in an L region adjacent to the left of the current block and whether inter-prediction is applied to the blocks in the L region adjacent to the left of the current block.

For example, if the number of blocks encoded with intra-prediction in the A region and L region is the same as the number of blocks encoded with inter-prediction in the A region and L region, the video decoding apparatus may perform weighted summation by applying the same weight to the intra-prediction block of the current block and the inter-prediction blocks of the subblocks. For example, if the number of blocks encoded by intra-prediction in the A region and L region is greater than the number of blocks encoded by inter-prediction in the A region and L region, the video decoding apparatus may perform weighted summation by applying a higher weight to the intra-prediction block of the current block than to the inter-prediction blocks of the subblocks. For example, if the number of blocks encoded by intra-prediction in the A region and L region is less than the number of blocks encoded by inter-prediction within the A region and L region, the video decoding apparatus may perform weighted summation by applying a higher weight to the inter-prediction blocks of the subblocks than to the intra-prediction block of the current block.

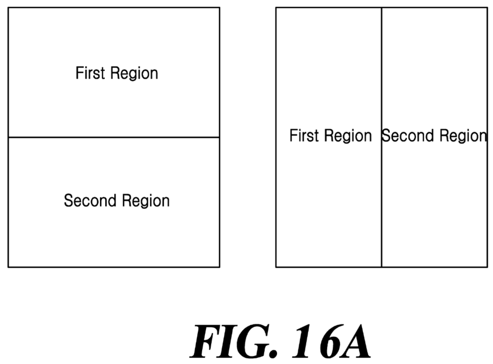

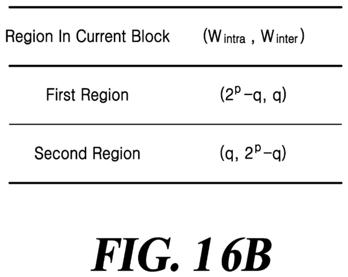

FIGS. 16A and 16B are diagrams illustrating a method of partitioning a current block into multiple regions and illustrating the weights for the respective regions, according to at least one embodiment of the present disclosure. The weights for the respective regions are those assigned to the intra-prediction signal of the respective regions within the current block and the inter-prediction signal of the respective regions within the current block.

Referring to FIG. 16A, when the intra-prediction mode of the current block is a directional prediction mode and is close to the vertical direction, the video decoding apparatus may partition the current block horizontally into a first region and a second region. When the intra-prediction mode of the current block is a directional prediction mode and is close to the horizontal direction, the video decoding apparatus may partition the current block vertically into a first region and a second region. The number of regions to be divided may be predefined or may be determined based on the size of the current block.

Referring to FIG. 16B, the video decoding apparatus may determine the weights for the first region and the weights for the second region. The weight applied to the intra-prediction signal of the first region may be $2^p-q$, and the weight applied to the inter-prediction signal of the first region may be q. The weight applied to the intra-prediction signal of the second region may be q, and the weight applied to the inter-prediction signal of the second region may be $2^p-q$. Here, q may be a predefined value, and $2^p-q$ may be a value greater than q. By assigning the weights for the respective regions to the intra-prediction signals of the first region and the second region, the video decoding apparatus may generate the intra-prediction block of the current block. The video decoding apparatus may assign the weights for the respective regions to the inter-prediction signal of the first region and the inter-prediction signal of the second region and thereby generate inter-prediction blocks of the subblocks.

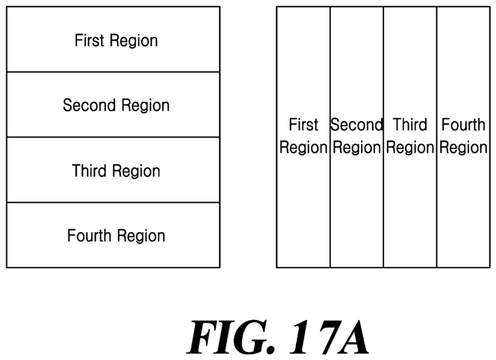

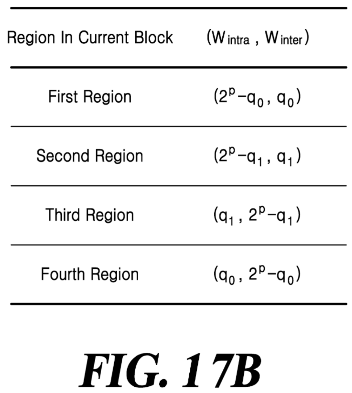

FIGS. 17A and 17B are diagrams illustrating a method of partitioning a current block into multiple regions and the weights for the respective regions, according to another at least one embodiment of the present disclosure.

Referring to FIG. 17A, when the intra-prediction mode of the current block is a directional prediction mode and is close to the vertical direction, the video decoding apparatus may partition the current block horizontally into a first region, a second region, a third region, and a fourth region. When the intra-prediction mode of the current block is a directional prediction mode and is close to the horizontal direction, the video decoding apparatus may partition the current block vertically into a first region, a second region, a third region, and a fourth region. The number of regions to be divided may be predefined or determined based on the size of the current block.

Referring to FIG. 17B, the video decoding apparatus may determine the weight for the first region, the weight for the second region, the weight for the third region, and the weight for the fourth region. The weight applied to the intra-prediction signal of the first region is $2^p-q_0$, and the weight applied to the inter-prediction signal of the first region may be $q_0$. The weight applied to the intra-prediction signal of the second region is $2^p-q_1$, and the weight applied to the inter-prediction signal of the second region may be $q_1$. The weight applied to the intra-prediction signal of the third region is $q_1$, and the weight applied to the inter-prediction signal of the third region may be $2^p-q_1$. The weight applied to the intra-prediction signal of the fourth region may be $q_0$, and the weight applied to the inter-prediction signal of the fourth region may be $2^p-q_0$. Here, $q_0$ and $q_1$ may be predefined, and $q_1$ may be greater than $q_0$. $2^p-q_0$ may be greater than $q_0$, and $2^p-q_1$ may be greater than $q_1$.

The video decoding apparatus may assign the weights for the regions to the intra-prediction signal of the first region, the intra-prediction signal of the second region, the intra-prediction signal of the third region, and the intra-prediction signal of the fourth region, thereby generating the intra-prediction block of the current block. The video decoding apparatus may assign weights for the regions to the inter-prediction signals of the first region, second region, third region, and fourth region, thereby generating inter-prediction blocks of the subblocks.

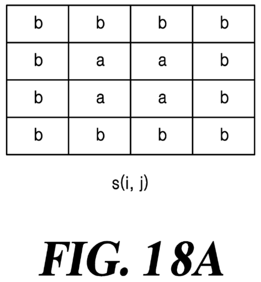

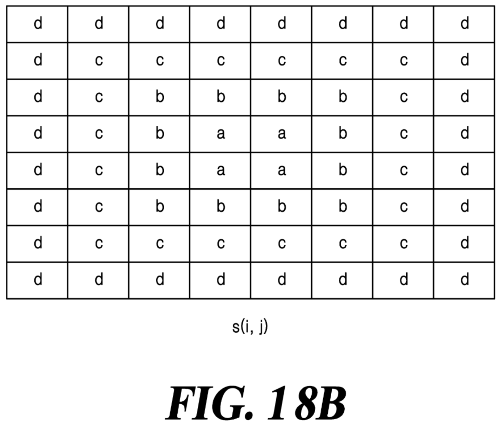

FIGS. 18A and 18B are diagrams illustrating the weight function of subblocks, according to at least one embodiment of the present disclosure. When the video decoding apparatus has determined the motion vector relative to the center position of the co-located subblocks by using SbTMVP, the video decoding apparatus may further lower the weight for the inter-prediction signal at increasing distances from the center of the subblock by using the weight function s(i, j). For example, the weight function may only be applied when the motion vectors of the subblocks are determined by affine mode.

Referring to FIG. 18A, when the subblock size is 4x4, the video decoding apparatus may further lower the weight for the inter-prediction signal at increasing distances from the center of the subblock by using the weight function s(i, j). Here, the weight function may be a distance function based on the distance L-infinity, L1, L2, etc. from the center of the subblock. L1 is the Chebyshev distance, and L2 may be the Euclidean distance. The weight applied by the weight function to the inter-prediction signal of the four 'a' regions within the subblock may be different from the weight applied by the weight function to the inter-prediction signal of the twelve 'b' regions within the subblock.

Referring to FIG. 18B, when the subblock size is 8x8, the video decoding apparatus may use the weight function s(i, j) to proportionlly reduce the weight for the inter-prediction signal at increasing distances from the center of the subblock increases. Here, the weight function may be a distance function based on the distance L-infinity, L1, L2, etc. from the center of the subblock. L1 is the Chebyshev distance, and L2 is the Euclidean distance. The weight function may apply different weights to the inter-prediction signals of the four 'a' regions within the subblock, the twelve 'b' regions within the subblock, the twenty 'c' regions within the subblock, and the twenty-eight 'd' regions within the subblock.

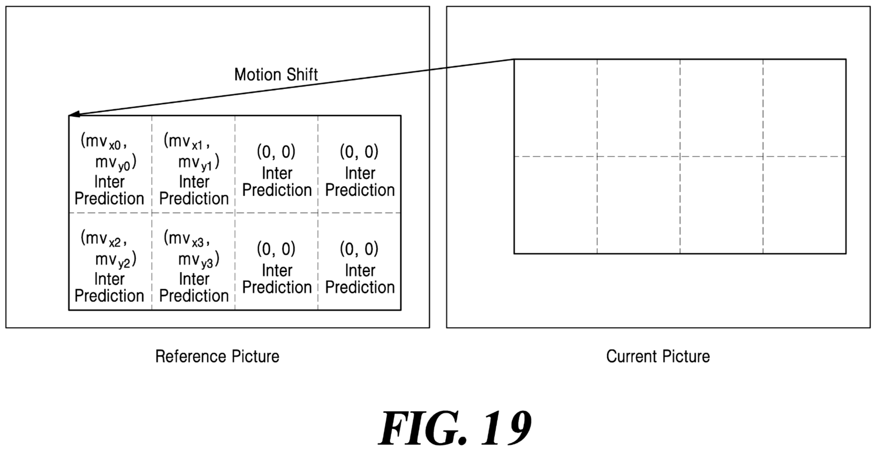

FIG. 19 is a diagram illustrating the weight for a subblock when a co-located subblock in the reference picture has a zero motion vector, according to at least one embodiment of the present disclosure.

Referring to FIG. 19, when the motion vector of the co-located subblock is zero, the motion vector of the co-located subblock is zero not only when the motion vector used for inter prediction of the co-located subblock is a zero motion vector, but also when inter prediction is not applied to the co-located subblock. When the video decoding apparatus generates motion vectors of subblocks by using SbTMVP and the motion vector of the co-located subblock is zero, the video decoding apparatus determines the weight for the subblock based on whether inter-prediction is applied to the co-located subblock.

For example, if the video decoding apparatus applies motion shift to generate the motion vector of the subblock by using SbTMVP and inter-prediction is not applied to the co-located subblock, resulting in the motion vector of the co-located subblock being a zero motion vector, the video decoding apparatus may apply a low weight to the inter-prediction blocks of the subblocks.

**Method of weighted summing the inter-prediction blocks of the subblocks and the intra-prediction block of the current block**

The inter-prediction blocks of the subblocks and the intra-prediction block of the current block may be weighted summed by using the weighst determined in FIG. 15 and the weight functions determined in FIGS. 18A and 18B. Another embodiment may weighted sum the inter-prediction blocks of the subblocks and the intra-prediction block of the current block by using the weights determined in FIG. 16B or the weights determined in FIG. 17B and the weight functions determined in FIGS. 18A and 18B. The prediction block $P_{CIIP}$ of the current block may be expressed as in Equation 3.

$$P_{CIIP} = \left( \left( W_{Inter} + s(i,j) \right) * P_{inter} + \left( W_{Intra} - s(i,j) \right) * P_{intra} + 2^{p-1} \right) \gg p$$

Equation 3

Here, $W_{inter}$ is the weight applied to the inter-prediction blocks of the subblocks, s(i, j) is the weight function, $P_{inter}$ is the inter-prediction blocks of the subblocks, $W_{intra}$ is the weight applied to the intra-prediction block of the current block, and $P_{intra}$ is the intra-prediction block of the current block. Here, p is calculated by $\log_2(W_{inter}+W_{intra})$.

**Reconstruction of Residual Block**

The residual block is reconstructed by performing inverse transform on the transform coefficients of the inverse quantized residual block. Here, if the residual block on which inverse transform is performed is predicted in subblock units in CIIP, the inverse transform kernel may be determined by using the kernel determination process in the inter-prediction mode regardless of the intra-prediction mode. When the residual block for which the inverse transform is performed is predicted in subblock units in CIIP, the inverse transform kernel may be determined based on the intra-prediction mode determined in the process of performing prediction in subblock units in CIIP. When the residual block for which inverse transform is performed is predicted in subblock units by CIIP, gradient values are calculated for the prediction block of the current block generated during the process of performing prediction in subblock units by CIIP, and the inverse transform kernel may be determined by using the intra-prediction mode of the current block determined based on the gradient values.

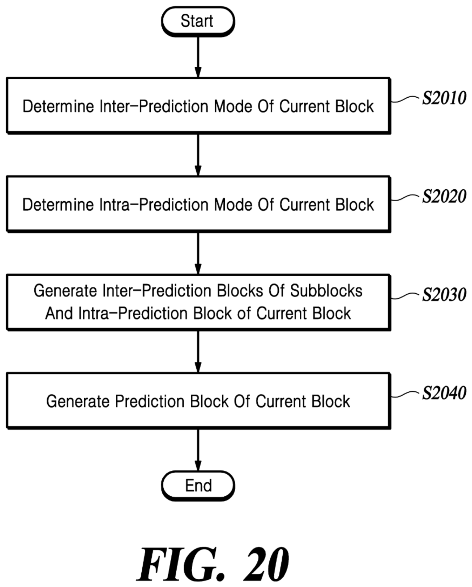

FIG. 20 is a flowchart of a video decoding process according to at least one embodiment of the present disclosure.

Referring to FIG. 20, the video decoding apparatus determines the inter-prediction mode of the current block based on at least one of the motion vectors of the first subblocks within the reference picture of the current block or the control point motion vectors of the current block (S2010). The process of determining the inter-prediction mode of the current block may include: generating candidate modes of the current block based on at least one of the motion vectors of the first subblocks or the control point motion vectors of the current block, calculating the variable values between the template of the subblocks and the template of the blocks corresponding to the subblocks in the reference pictures, orderly arranging the candidate modes based on the variable values to generate a candidate list of the current block, and determining the inter-prediction mode of the current block by using the candidate list of the current block. The reference pictures may be determined based on the candidate modes of the current block.

The video decoding apparatus determines the intra-prediction mode of the current block based on at least one of the reference pixels of the current block or the template of the current block (S2020). The process of determining the intra-prediction mode of the current block may include applying a predetermined filter to the reference pixels of the current block to calculate the gradients of the reference pixels, generating a histogram by using the gradients of the reference pixels, and determining the intra-prediction mode of the current block by using the histogram. The process of determining the intra-prediction mode of the current block may include generating prediction pixels by applying predefined intra-prediction modes of the current block to reference pixels of the template of the current block, calculating first variable vlaues between the prediction pixels and reconstructed pixels of the template of the current block, and determining the intra-prediction mode of the current block based on the first variable values.

The video decoding device generates inter-prediction blocks of subblocks by using the inter-prediction mode of the current block, and generates intra-prediction blocks of the current block by using the intra-prediction mode of the current block (S2030). The video decoding device generates a prediction block of the current block by weight summing the inter-prediction blocks of the subblocks and the intra-prediction block of the current block (S2040). The weights used to weighted sum the inter-prediction blocks of the subblocks and the intra-prediction block of the current block may be determined based on whether intra prediction is applied to the blocks in the region adjacent to the top of the current block and whether inter prediction is applied to the blocks in the region adjacent to the left of the current block. The weights used to weighted sum the inter-prediction blocks of the subblocks and the intra-prediction block of the current block may be predefined values. The weight function used to weighted sum the inter-prediction blocks of the subblocks and the intra-prediction block of the current block may be determined based on the distance from the center of the subblocks.

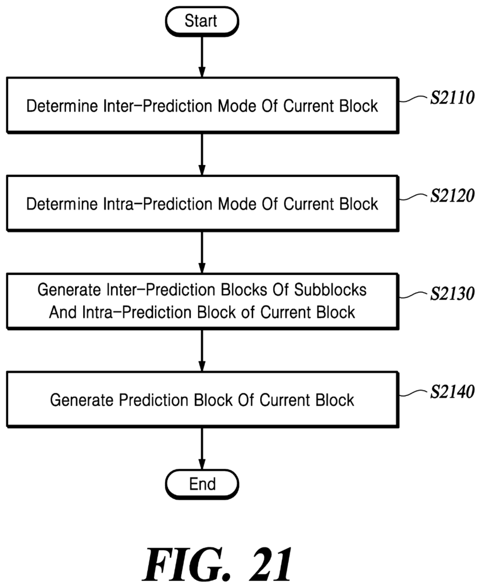

FIG. 21 is a flowchart of a video encoding process according to at least one embodiment of the present disclosure.

Referring to FIG. 21, the video encoding apparatus determines the inter-prediction mode of the current block based on at least one of the motion vectors of the first subblocks within the reference picture of the current block or the control point motion vectors of the current block (S2110). The process of determining the inter-prediction mode of the current block may include: generating candidate modes of the current block based on at least one of the motion vectors of the first subblocks or the control point motion vectors of the current block, calculating variable values between the template of the subblocks and the template of the blocks corresponding to the subblocks in the reference pictures, orderly arranging the candidate modes based on the variable values to generate a candidate list of the current block, and determining the inter-prediction mode of the current block by using the candidate list of the current block. The reference pictures may be determined based on the candidate modes of the current block.

The video encoding apparatus determines the intra-prediction mode of the current block based on at least one of the reference pixels of the current block or the template of the current block (S2120). The process of determining the intra-prediction mode of the current block may include applying a predetermined filter to the reference pixels of the current block to calculate the gradients of the reference pixels, generating a histogram by using the gradients of the reference pixels, and determining the intra-prediction mode of the current block by using the histogram. The process of determining the intra-prediction mode of the current block may include generating prediction pixels by applying predefined intra-prediction modes of the current block to reference pixels of the template of the current block, calculating first variable values between the prediction pixels and reconstructed pixels of the template of the current block, and determining the intra-prediction mode of the current block based on the first variable values.

The video encoding apparatus generates inter-prediction blocks of subblocks by using the inter-prediction mode of the current block, and generates an intra-prediction block of the current block by using the intra-prediction mode of the current block (S2130). The video encoding apparatus weighted sums the inter-prediction blocks of the subblocks and the intra-prediction blocks of the current block to generate a prediction block of the current block (S2140). The weights used for weighted summing the inter-prediction blocks of the subblocks and the intra-prediction block of the current block may be determined based on whether intra-prediction is applied to blocks in a region adjacent to the top of the current block and whether inter-prediction is applied to blocks in a region adjacent to the left of the current block. The weights used for weighted summing the inter-prediction blocks of the subblocks and the intra-prediction block of the current block may be predefined values. The weight function used to weighted sum the inter-prediction blocks of the subblocks and the intra-prediction blocks of the current block may be determined based on the distance from the center of the subblocks.

Although the steps in the respective flowcharts/timing charts are described in this specification as being sequentially performed, they merely instantiate the technical idea of some embodiments of the present disclosure. Therefore, a person having ordinary skill in the pertinent art could perform the steps by changing the sequences described in the respective flowcharts/timing charts or by performing two or more of the steps in parallel, and hence the steps in the respective flowcharts/timing charts are not limited to the illustrated chronological sequences.

It should be understood that the above description presents illustrative embodiments that may be implemented in various other manners. The functions described in some embodiments may be realized by hardware, software, firmware, and/or their combination. It should also be understood that the functional components described in this specification are labeled by "... unit" to strongly emphasize the possibility of their independent realization.

Meanwhile, various methods or functions described in some embodiments may be implemented as instructions stored in a non-transitory recording medium that can be read and executed by one or more processors. The non-transitory recording medium includes, for example, all types of recording devices in which data is stored in a form readable by a computer system. For example, the non-transitory recording medium may include storage media such as erasable programmable read-only memory (EPROM), flash drive, optical drive, magnetic hard drive, and solid state drive (SSD), among others.

Although embodiments of the present disclosure have been described for illustrative purposes, those having ordinary skill in the art to which this disclosure pertains should appreciate that various modifications, additions, and substitutions are possible, without departing from the idea and scope of the present disclosure. Therefore, embodiments of the present disclosure have been described for the sake of brevity and clarity. The scope of the technical idea of the embodiments of the present disclosure is not limited by the illustrations. Accordingly, those having ordinary skill in the art to which the present disclosure pertains should understand that the scope of the present disclosure should not be limited by the above explicitly described embodiments but by the claims and equivalents thereof.

**Claims**

1. A video decoding method, comprising:

   determining an inter-prediction mode of a current block based on at least one of motion vectors of first subblocks in a reference picture of the current block or control point motion vectors of the current block, the first subblocks corresponding to subblocks of the current block;
   determining an intra-prediction mode of the current block based on at least one of reference pixels of the current block or a template of the current block;
   generating inter-prediction blocks of the subblocks by using the inter-prediction mode of the current block, and generating an intra-prediction block of the current block by using the intra-prediction mode of the current block; and
   generating a prediction block of the current block by weighted summing the inter-prediction blocks of the subblocks and the intra-prediction block of the current block.

2. The video decoding method of claim 1, wherein the determining the inter-prediction mode of the current block comprises:

   generating candidate modes of the current block based on at least one of the motion vectors of the first subblocks or the control point motion vectors of the current block;
   calculating variable values between a template of the subblocks and a template of blocks that correspond to the subblocks and are in reference pictures that are determined based on the candidate modes of the current block;
   generating a candidate list of the current block by orderly arranging the candidate modes based on the variable values; and
   determining the inter-prediction mode of the current block by using the candidate list of the current block.

3. The video decoding method of claim 1, wherein the determining the intra-prediction mode of the current block comprises:

   calculating a slope of the reference pixels by applying a predetermined filter to the reference pixels of the current block;
   generating a histogram by using the slope of the reference pixels; and
   determining the intra-prediction mode of the current block by using the histogram.

4. The video decoding method of claim 1, wherein the determining the intra-prediction mode of the current block comprises:

   generating prediction pixels by applying predefined intra-prediction modes of the current block to reference pixels of a template of the current block;
   calculating first variable values between the prediction pixels and reconstructed pixels of the template of the current block; and
   determining the intra-prediction mode of the current block based on the first variable values.

5. The video decoding method of claim 1, wherein weights used for the weighted summing are determined based on whether intra-prediction is applied to blocks in a region adjacent to a top side of the current block and whether inter-prediction is applied to blocks in a region adjacent to a left side of the current block.

6. The video decoding method of claim 1, wherein weights used for the weighted summing are predefined.

7. The video decoding method of claim 1, wherein a weight function used for the weighted summing is determined based on a distance from a center of the subblocks.

8. A video encoding method, comprising:

determining an inter-prediction mode of a current block based on at least one of motion vectors of first subblocks in a reference picture of the current block or control point motion vectors of the current block, the first subblocks corresponding to subblocks of the current block;
determining an intra-prediction mode of the current block based on at least one of reference pixels of the current block or a template of the current block;
generating inter-prediction blocks of the subblocks by using the inter-prediction mode of the current block, and generating an intra-prediction block of the current block by using the intra-prediction mode of the current block; and
generating a prediction block of the current block by weighted summing the inter-prediction blocks of the subblocks and the intra-prediction block of the current block.

9. The video encoding method of claim 8, wherein the determining the inter-prediction mode of the current block comprises:

generating candidate modes of the current block based on at least one of the motion vectors of the first subblocks or the control point motion vectors of the current block;
calculating variable values between a template of the subblocks and a template of blocks that correspond to the subblocks and are in reference pictures that are determined based on the candidate modes of the current block;
generating a candidate list of the current block by orderly arranging the candidate modes based on the variable values; and
determining the inter-prediction mode of the current block by using the candidate list of the current block.

10. The video encoding method of claim 8, wherein the determining the intra-prediction mode of the current block comprises:

calculating a slope of the reference pixels by applying a predetermined filter to the reference pixels of the current block;
generating a histogram by using the slope of the reference pixels; and
determining the intra-prediction mode of the current block by using the histogram.

11. The video encoding method of claim 8, wherein the determining the intra-prediction mode of the current block comprises:

generating prediction pixels by applying predefined intra-prediction modes of the current block to reference pixels of a template of the current block;
calculating first variable values between the prediction pixels and reconstructed pixels of the template of the current block; and
determining the intra-prediction mode of the current block based on the first variable values.

12. The video encoding method of claim 8, wherein weights used for the weighted summing are determined based on whether intra-prediction is applied to blocks in a region adjacent to a top side of the current block and whether inter-prediction is applied to blocks in a region adjacent to a left side of the current block.

13. The video encoding method of claim 8, wherein weights used for the weighted summing are predefined.

14. The video encoding method of claim 8, wherein a weight function used for the weighted summing is determined based on a distance from a center of the subblocks.

15. A method of transmitting a bitstream associated with video data, the method comprising:

generating the bitstream by encoding the video data; and
transmitting the bitstream to a video decoding apparatus,
wherein the generating of the bitstream comprising:

determining an inter-prediction mode of a current block based on at least one of motion vectors of first subblocks in a reference picture of the current block or control point motion vectors of the current block, the first subblocks corresponding to subblocks of the current block;
determining an intra-prediction mode of the current block based on at least one of reference pixels of the current block or a template of the current block;
generating inter-prediction blocks of the subblocks by using the inter-prediction mode of the current block, and generating an intra-prediction block of the current block by using the intra-prediction mode of the current block; and
generating a prediction block of the current block by weighted summing the inter-prediction blocks of the subblocks and the intra-prediction block of the current block.

**FIG. 1**

# FIG. 2

FIG. 3A

**FIG. 3B**

**FIG. 4**

**FIG. 5**

FIG. 6

**FIG. 7**

| Intra-prediction Encoding Status | | Weight (w) |
|---|---|---|
| Top Neighboring Block A | Left Neighboring Block L | |
| O | O | 3 |
| O | X | 2 |
| X | O | 2 |
| X | X | 1 |

# *FIG. 8*

Motion
Vector
Of A1

Reference Picture

Current Picture

→ Co-located Subblock's First Motion Vector

→ Co-located Subblock's Second Motion Vector

--→ Current Subblock's First Motion Vector

--→ Current Subblock's Second Motion Vector

*FIG. 9*

**FIG. 10**

# FIG. 11

**FIG. 12**

Start → Determine Motion Vector Of Subblocks — S1310

Determine Intra-Prediction Mode Of Current Block — S1320

Calculate Weight — S1330

Generate Prediction Block Of Current Block — S1340

End

# FIG. 13

Reference Picture

Current Picture

Template

Subblock

# FIG. 14

**FIG. 15**

**FIG. 16A**

| Region In Current Block | $(W_{intra}, W_{inter})$ |
|---|---|
| First Region | $(2^p - q, q)$ |
| Second Region | $(q, 2^p - q)$ |

# *FIG. 16B*

| First Region |
| :---: |
| Second Region |
| Third Region |
| Fourth Region |

| First Region | Second Region | Third Region | Fourth Region |
| :---: | :---: | :---: | :---: |

# FIG. 17A

| Region In Current Block | $(W_{intra}, W_{inter})$ |
|---|---|
| First Region | $(2^p - q_0, q_0)$ |
| Second Region | $(2^p - q_1, q_1)$ |
| Third Region | $(q_1, 2^p - q_1)$ |
| Fourth Region | $(q_0, 2^p - q_0)$ |

# *FIG. 17B*

| b | b | b | b |
|---|---|---|---|
| b | a | a | b |
| b | a | a | b |
| b | b | b | b |

s(i, j)

# FIG. 18A

| d | d | d | d | d | d | d | d |
|---|---|---|---|---|---|---|---|
| d | c | c | c | c | c | c | d |
| d | c | b | b | b | b | c | d |
| d | c | b | a | a | b | c | d |
| d | c | b | a | a | b | c | d |
| d | c | b | b | b | b | c | d |
| d | c | c | c | c | c | c | d |
| d | d | d | d | d | d | d | d |

s(i, j)

# FIG. 18B

**FIG. 19**

EP 4 697 718 A1

Start

Determine Inter-Prediction Mode Of Current Block — *S2010*

Determine Intra-Prediction Mode Of Current Block — *S2020*

Generate Inter-Prediction Blocks Of Subblocks And Intra-Prediction Block of Current Block — *S2030*

Generate Prediction Block Of Current Block — *S2040*

End

# *FIG. 20*

Start

Determine Inter-Prediction Mode Of Current Block — S2110

Determine Intra-Prediction Mode Of Current Block — S2120

Generate Inter-Prediction Blocks Of Subblocks And Intra-Prediction Block of Current Block — S2130

Generate Prediction Block Of Current Block — S2140

End

# FIG. 21

## INTERNATIONAL SEARCH REPORT

| | International application No. |
|---|---|
| | **PCT/KR2024/006290** |

| A. | CLASSIFICATION OF SUBJECT MATTER |
|---|---|

**H04N 19/52**(2014.01)i; **H04N 19/11**(2014.01)i; **H04N 19/70**(2014.01)i; **H04N 19/527**(2014.01)i; **H04N 19/109**(2014.01)i; **H04N 19/159**(2014.01)i; **H04N 19/176**(2014.01)i

According to International Patent Classification (IPC) or to both national classification and IPC

| B. | FIELDS SEARCHED |
|---|---|

Minimum documentation searched (classification system followed by classification symbols)

H04N 19/52(2014.01); H04N 19/105(2014.01); H04N 19/107(2014.01); H04N 19/117(2014.01); H04N 19/119(2014.01); H04N 19/136(2014.01); H04N 19/159(2014.01); H04N 19/70(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 움직임벡터 (motion vector), 인터 예측 (inter prediction), 인트라 예측 (intra prediction), 가중 합 (weighted sum), 서브 블록 (sub block)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2021-0035067 A (ELECTRONICS AND TELECOMMUNICATIONS RESEARCH INSTITUTE et al.) 31 March 2021 (2021-03-31)<br>See paragraphs [0077]-[0284]. | 1-15 |
| Y | KR 10-2021-0089149 A (BEIJING BYTEDANCE NETWORK TECHNOLOGY CO., LTD. et al.) 15 July 2021 (2021-07-15)<br>See paragraphs [0073]-[0423]. | 1-15 |
| A | KR 10-2022-0036942 A (WILUS INSTITUTE OF STANDARDS AND TECHNOLOGY INC. et al.) 23 March 2022 (2022-03-23)<br>See claims 1-8. | 1-15 |
| A | US 2022-0256141 A1 (HUAWEI TECHNOLOGIES CO., LTD.) 11 August 2022 (2022-08-11)<br>See claims 1-10. | 1-15 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 August 2024** | **21 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2024/006290**

### C.    DOCUMENTS CONSIDERED TO BE RELEVANT

| Category* | Citation of document, with indication, where appropriate, of the relevant passages | Relevant to claim No. |
|---|---|---|
| A | US 2022-0201299 A1 (SAMSUNG ELECTRONICS CO., LTD.) 23 June 2022 (2022-06-23) See paragraphs [0005]-[0032]. | 1-15 |

## INTERNATIONAL SEARCH REPORT
### Information on patent family members

| International application No. |
|---|
| **PCT/KR2024/006290** |

| Patent document cited in search report | | | Publication date (day/month/year) | Patent family member(s) | | | Publication date (day/month/year) |
|---|---|---|---|---|---|---|---|
| KR | 10-2021-0035067 | A | 31 March 2021 | CN | 113875235 | A | 31 December 2021 |
| | | | | US | 12041227 | B2 | 16 July 2024 |
| | | | | US | 2022-0321880 | A1 | 06 October 2022 |
| | | | | WO | 2021-060825 | A1 | 01 April 2021 |
| KR | 10-2021-0089149 | A | 15 July 2021 | CN | 111436227 | A | 21 July 2020 |
| | | | | CN | 111436227 | B | 29 March 2024 |
| | | | | CN | 111630858 | A | 04 September 2020 |
| | | | | CN | 111630858 | B | 29 March 2024 |
| | | | | CN | 111630865 | A | 04 September 2020 |
| | | | | CN | 111630865 | B | 27 June 2023 |
| | | | | CN | 113545038 | A | 22 October 2021 |
| | | | | CN | 113545038 | B | 24 October 2023 |
| | | | | EP | 3857893 | A1 | 04 August 2021 |
| | | | | EP | 3915251 | A1 | 01 December 2021 |
| | | | | EP | 3915259 | A1 | 01 December 2021 |
| | | | | JP | 2022-505889 | A | 14 January 2022 |
| | | | | JP | 2022-506119 | A | 17 January 2022 |
| | | | | JP | 2022-521554 | A | 08 April 2022 |
| | | | | JP | 2022-522149 | A | 14 April 2022 |
| | | | | JP | 7146086 | B2 | 03 October 2022 |
| | | | | KR | 10-2021-0131347 | A | 02 November 2021 |
| | | | | KR | 10-2021-0134644 | A | 10 November 2021 |
| | | | | KR | 10-2024-0007302 | A | 16 January 2024 |
| | | | | KR | 10-2628361 | B1 | 23 January 2024 |
| | | | | KR | 10-2635518 | B1 | 07 February 2024 |
| | | | | KR | 10-2649138 | B1 | 18 March 2024 |
| | | | | US | 11146797 | B2 | 12 October 2021 |
| | | | | US | 11303907 | B2 | 12 April 2022 |
| | | | | US | 11375228 | B1 | 28 June 2022 |
| | | | | US | 11405633 | B1 | 02 August 2022 |
| | | | | US | 11470331 | B2 | 11 October 2022 |
| | | | | US | 11956449 | B2 | 09 April 2024 |
| | | | | US | 2021-0144366 | A1 | 13 May 2021 |
| | | | | US | 2021-0144388 | A1 | 13 May 2021 |
| | | | | US | 2021-0144392 | A1 | 13 May 2021 |
| | | | | US | 2021-0211716 | A1 | 08 July 2021 |
| | | | | WO | 2020-098643 | A1 | 22 May 2020 |
| | | | | WO | 2020-098644 | A1 | 22 May 2020 |
| | | | | WO | 2020-098780 | A1 | 22 May 2020 |
| | | | | WO | 2020-098782 | A1 | 22 May 2020 |
| KR | 10-2022-0036942 | A | 23 March 2022 | CN | 112840654 | A | 25 May 2021 |
| | | | | CN | 112840654 | B | 16 April 2024 |
| | | | | CN | 114208205 | A | 18 March 2022 |
| | | | | EP | 3866468 | A1 | 18 August 2021 |
| | | | | EP | 4007282 | A1 | 01 June 2022 |
| | | | | JP | 2022-502972 | A | 11 January 2022 |
| | | | | JP | 2022-543207 | A | 11 October 2022 |
| | | | | JP | 2023-162362 | A | 08 November 2023 |
| | | | | JP | 2024-038271 | A | 19 March 2024 |
| | | | | JP | 7342118 | B2 | 11 September 2023 |

Form PCT/ISA/210 (patent family annex) (July 2022)

**INTERNATIONAL SEARCH REPORT**
Information on patent family members

International application No.

**PCT/KR2024/006290**

| Patent document cited in search report | | | Publication date (day/month/year) | Patent family member(s) | | | Publication date (day/month/year) |
|---|---|---|---|---|---|---|---|
| | | | | KR | 10-2021-0057187 | A | 20 May 2021 |
| | | | | US | 11563936 | B2 | 24 January 2023 |
| | | | | US | 11601641 | B2 | 07 March 2023 |
| | | | | US | 12047562 | B2 | 23 July 2024 |
| | | | | US | 2021-0235072 | A1 | 29 July 2021 |
| | | | | US | 2022-0279162 | A1 | 01 September 2022 |
| | | | | US | 2023-0113874 | A1 | 13 April 2023 |
| | | | | US | 2024-0195954 | A1 | 13 June 2024 |
| | | | | WO | 2020-076143 | A1 | 16 April 2020 |
| | | | | WO | 2021-015586 | A1 | 28 January 2021 |
| US | 2022-0256141 | A1 | 11 August 2022 | CN | 114424567 | A | 29 April 2022 |
| | | | | CN | 114424567 | B | 07 July 2023 |
| | | | | EP | 4022922 | A1 | 06 July 2022 |
| | | | | EP | 4022922 | A4 | 23 November 2022 |
| | | | | WO | 2021-061018 | A1 | 01 April 2021 |
| US | 2022-0201299 | A1 | 23 June 2022 | BR | 112021000651 | A2 | 13 April 2021 |
| | | | | CN | 112514402 | A | 16 March 2021 |
| | | | | EP | 3833030 | A1 | 09 June 2021 |
| | | | | EP | 3833030 | A4 | 22 June 2022 |
| | | | | KR | 10-2021-0027252 | A | 10 March 2021 |
| | | | | KR | 10-2021-0156349 | A | 24 December 2021 |
| | | | | KR | 10-2021-0156350 | A | 24 December 2021 |
| | | | | KR | 10-2023-0022284 | A | 14 February 2023 |
| | | | | KR | 10-2024-0018689 | A | 13 February 2024 |
| | | | | KR | 10-2341858 | B1 | 22 December 2021 |
| | | | | KR | 10-2499383 | B1 | 13 February 2023 |
| | | | | KR | 10-2499384 | B1 | 13 February 2023 |
| | | | | KR | 10-2633784 | B1 | 05 February 2024 |
| | | | | SG | 11202100154 | A | 25 February 2021 |
| | | | | US | 11310499 | B2 | 19 April 2022 |
| | | | | US | 11800103 | B2 | 24 October 2023 |
| | | | | US | 11800104 | B2 | 24 October 2023 |
| | | | | US | 11870988 | B2 | 09 January 2024 |
| | | | | US | 11882246 | B2 | 23 January 2024 |
| | | | | US | 2021-0152827 | A1 | 20 May 2021 |
| | | | | US | 2022-0191491 | A1 | 16 June 2022 |
| | | | | US | 2022-0201296 | A1 | 23 June 2022 |
| | | | | US | 2022-0201298 | A1 | 23 June 2022 |
| | | | | WO | 2020-027551 | A1 | 06 February 2020 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230060325
- KR 1020240060640